(19) **Europäisches Patentamt**
**European Patent Office**
**Office européen des brevets**

(11) **EP 2 409 884 B1**

(12) **EUROPEAN PATENT SPECIFICATION**

(45) Date of publication and mention
of the grant of the patent:
**28.11.2018 Bulletin 2018/48**

(51) Int Cl.:
***B60T 7/12*** *(2006.01)* ***F16D 59/00*** *(2006.01)*

(21) Application number: **11005685.0**

(22) Date of filing: **12.07.2011**

(54) **Vehicle braking assist device and vehicle braking assist method**

Fahrzeugbremshilfevorrichtung und Fahrzeugbremshilfeverfahren

Dispositif de freinage assisté de véhicule et procédé de freinage assisté de véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2010 JP 2010165959**

(43) Date of publication of application:
**25.01.2012 Bulletin 2012/04**

(73) Proprietor: **NISSAN MOTOR CO., LTD.**
**Yokohama-shi, Kanagawa 221-0023 (JP)**

(72) Inventors:
• **Inoue, Takuya**
**Atsugi-shi**
**Kanagawa, 243-0123 (JP)**

• **Sugano, Takeshi**
**Atsugi-shi**
**Kanagawa, 243-0123 (JP)**
• **Kobayashi, Masahiro**
**Atsugi-shi**
**Kanagawa, 243-0123 (JP)**
• **Kurata, Kazunori**
**Atsugi-shi**
**Kanagawa, 243-0123 (JP)**

(74) Representative: **Hoefer & Partner Patentanwälte mbB**
**Pilgersheimer Straße 20**
**81543 München (DE)**

(56) References cited:
**EP-A1- 1 743 818 EP-A2- 1 860 013**
**US-A1- 2007 145 818**

**Description**

TECHNICAL FIELD

This invention pertains to a technology of vehicle braking assist for assisting driver operation with respect to obstacles in the travelling direction of the host vehicle.

BACKGROUND

As a vehicle braking assist device for assisting driver operation with respect to obstacles in the travelling direction of the host vehicle, for example, Patent Reference 1 describes a device in which judgment is made on whether the brake-to-avoid limit has been overrun based on the distance and relative speed with respect to the obstacle ahead of the host vehicle obtained by means of radar. When it is judged that the brake-to-avoid limit has been overrun, a braking force is applied to assist the driver operation.

Patent Reference 1: Japanese Kokai Patent Application No. 2009-154607

EP 1 743 818 A1 discloses a vehicle braking assist device for a host vehicle comprising a risk potential computing means for computing a risk potential of the host vehicle with respect to an obstacle in the travelling direction of the host vehicle and an accelerator detecting means for detecting the operation state of an accelerator.

SUMMARY

For the vehicle operation assist device that assists the driver operation of the braking function, in order to enable avoiding the obstacle in the lane where the host vehicle is travelling at a high speed, setting the assist to ensure early start of application of the braking force (braking assist) is necessary. However, if the braking assist is applied too early, some problems may take place. That is, when the driver accelerates intentionally to approach the obstacle to pass it, or in similar cases, the braking assist is applied against the intention of the driver, which can cause the driver discomfort.

In order to solve the problem, the object of the present invention is to provide a scheme characterized in that the assist to the driver operation with respect to obstacles in the travelling direction of the host vehicle is executed appropriately corresponding to the intention of the driver.

In order to solve the problem, the present invention has the following characteristic features: when it is judged that the risk potential of the host vehicle with respect to obstacles in the travelling direction of the host vehicle is higher than a preset first threshold while the accelerator is not operated for acceleration, a braking force is applied on the host vehicle. In addition, when it is judged that the risk potential of the host vehicle with respect to the obstacles in the travelling direction of the host vehicle is higher than a second threshold, which is higher than the first threshold, a braking force is applied to the host vehicle irrespective of the operation state of the accelerator.

According to the present invention, a braking force is applied on the host vehicle irrespective of the operation state of the accelerator if the risk potential is higher than the second threshold with respect to obstacles in the travelling direction of the host vehicle. Consequently, braking can be applied reliably in assisting the driver operation. On the other hand, when the risk potential is between a first threshold and the second threshold, with the first threshold having a risk potential lower than that of the second threshold, if the accelerator is not operated for acceleration, a braking force is applied to the host vehicle, so that a braking force is applied only when the driver does not intend to accelerate. As a result, it is possible to apply a braking force to the host vehicle corresponding to the intention of the driver.

Consequently, it is possible to assist the driver with respect to obstacles in the travelling direction of the host vehicle appropriately corresponding to the intention of the driver.

BRIEF DESCRIPTION OF THE DRAWINGS

Figure 1 is a schematic view of the host vehicle according to an embodiment of the present invention.
Figure 2 is a schematic view of the controller of the host vehicle in Figure 1 according to an embodiment of the present invention.
Figure 3 is a schematic view of the host vehicle/obstacle information acquisition part of the host vehicle in Figure 1 according to an embodiment of the present invention.
Figure 4 is a schematic view of the assist information computing part of the host vehicle in Figure 1 according to an embodiment of the present invention.
Figure 5 is a schematic view of the braking force computing part of the host vehicle in Figure 1 according to an embodiment of the present invention.

Figure 6 is a schematic view of the accelerator reactive force computing part of the host vehicle in Figure 1 according to an embodiment of the present invention.

Figure 7 is a flowchart illustrating processing carried out in the braking force computing part in Figure 5.

Figure 8 is a flowchart illustrating the processing carried out in the accelerator reactive force computing part in Figure 6.

Figure 9 is a time chart illustrating Embodiment 1 of the present invention.

Figure 10 is a pictoral view illustrating an example of computing of the risk potential pertaining to Embodiment 2 of the present invention.

Figure 11 is a time chart illustrating Embodiment 3 of the present invention.

Figure 12 is a time chart illustrating Embodiment 4 of the present invention.

DETAILED DESCRIPTION

Embodiment 1

In the following, Embodiment 1 will be explained with reference to the figures.

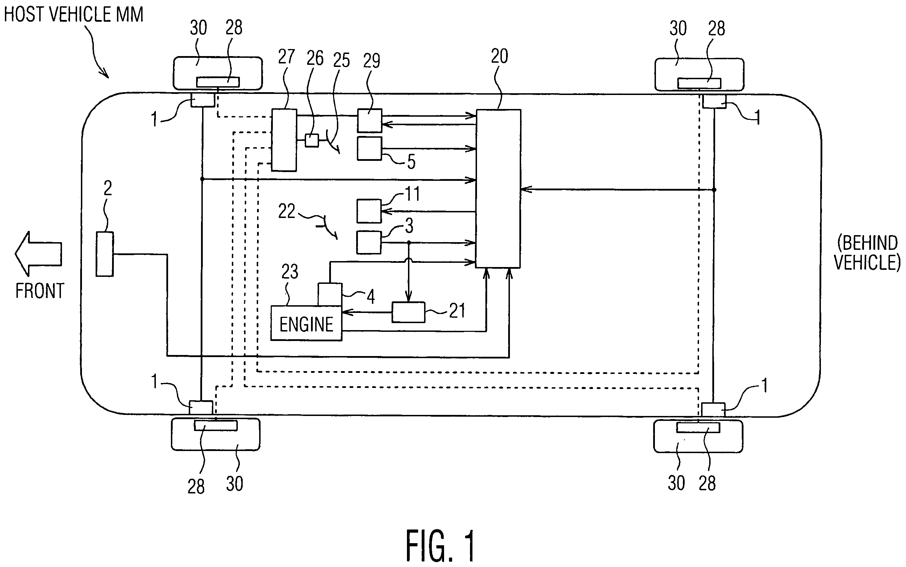

Figure 1 is a schematic view of the host vehicle according to an embodiment of the present invention.

Here, host vehicle MM has the following parts: wheel velocity sensors 1, obstacle information detecting sensor 2, accelerator operation state sensor 3, throttle operation state sensor 4, shift position sensor 5, accelerator reactive force application device 11, throttle operation state controlling part 21, controller 20, and engine 23 as the driving source of the vehicle that applies driving force to wheels via a transmission not shown in the figure.

Here, wheel velocity sensors 1 are arranged corresponding to each wheel 30 of host vehicle MM, and the wheel velocity of each wheel 30 is detected and output to controller 20.

The obstacle information detecting sensor 2 detects obstacle XM located ahead of the host vehicle MM in the travelling direction of the host vehicle MM, and outputs the information of detected obstacle XM to controller 20. For example, obstacle information detecting sensor 2 may be laser radar that emits a laser beam ahead of the host vehicle MM and receives reflected light, and that detects the time from exit of the laser beam to reception of the reflected light and outputs it to controller 20. In this embodiment, the obstacle information detecting sensor 2 is described as laser radar. However, one can appropriately select other types, such as mm-wave radar, a camera or the like that can detect information regarding obstacle XM ahead of the vehicle.

The accelerator operation state sensor 3 detects the accelerator operation state (manipulation quantity) of accelerator 22 and outputs the detected accelerator operation state to controller 20.

The throttle operation state sensor 4 detects the throttle operation state of engine 23, and outputs the detected throttle operation state to controller 20.

The transmission position sensor 5 detects the transmission position of the transmission (not shown in the figure) (the shift stage of the transmission or the transmission ratio), and outputs the detected transmission position to controller 20.

Here, accelerator reactive force application device 11 is an actuator equipped with a motor or the like for applying a reactive force on accelerator 22 based on an instruction from controller 20. Just like conventional accelerators 22, in this embodiment, with a spring or other reactive force applying structure, a reactive force corresponding to the manipulation quantity of accelerator 22 (hereinafter to be referred to as normal reactive force) is applied on accelerator 22. Consequently, the reactive force applied by the accelerator reactive force application device 11 is superposed on the reactive force as it is applied. That is, the reactive force actually generated at accelerator 22 becomes the normal reactive force when accelerator reactive force application device 11 is off. On the other hand, when accelerator reactive force application device 11 is turned on, the reactive force applied by accelerator reactive force application device 11 is added to the normal reactive force to get the reactive force actually applied in this case.

The throttle operation state controlling part 21 computes the throttle operation state target value based on the accelerator operation state detected by accelerator operation state sensor 3, and controls the throttle operation state of engine 23 based on the computed throttle operation state target value. One may also adopt a scheme in which a map that defines the correlation between the accelerator operation state and the throttle operation state target value is stored beforehand, and the map is used to compute the throttle operation state target value from the accelerator operation state detected by accelerator operation state sensor 3. Also, the following scheme may be adopted: a numeric equation representing the correlation between the accelerator operation state and the throttle operation state target value is stored beforehand, and, based on the pre-stored numeric equation, the throttle operation state target value can be computed from the accelerator operation state detected by accelerator operation state sensor 3. That is, it is possible to appropriately change the method for computing the throttle operation state target value.

The host vehicle MM also has a braking device. In the following, the braking device will be explained. A brake 25 operated by the driver is connected with master cylinder 26 via a booster (not shown in the figure). Here, master cylinder 26 is connected with each wheel cylinder 28 of each wheel 30 via hydraulic circuit 27. As a result, when the braking device is off (inactive), the braking hydraulic pressure is increased corresponding to the operation quantity of brake 25 by the driver by means of master cylinder 26. The increased braking hydraulic pressure is fed via hydraulic circuit 27 to wheel cylinder 28 of each wheel 30. Here, braking hydraulic pressure controlling part 29 controls the actuator in hydraulic circuit 27 based on a braking force instruction value from controller 20, and the braking hydraulic pressure on each wheel 30 is controlled individually.

Here, for example, braking hydraulic pressure controlling part 29 and hydraulic circuit 27 may be made of the braking hydraulic pressure controlling part adopted in an anti-skid or antilock brake system controller (ABS), traction controller (TCS) or vehicle dynamics controller (VDC).

The braking hydraulic pressure controlling part 29 and hydraulic circuit 27 form braking force applying device 9 to be explained later. Here, braking force application device 9 is not limited to a constitution of braking applied by means of hydraulic pressure. Braking force application device 9 may also be made of an electric braking unit or the like.

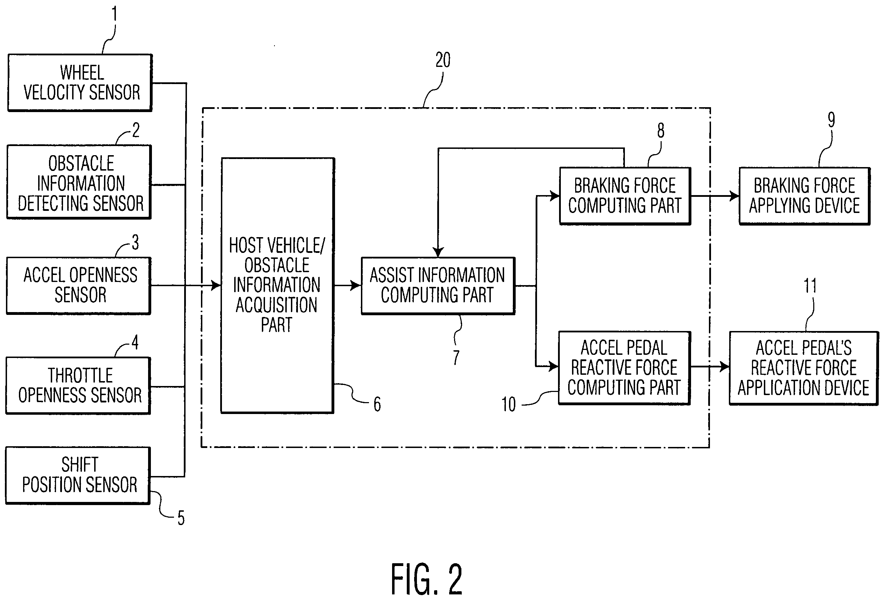

Figure 2 is a schematic view of the controller of the host vehicle in Figure 1 according to an embodiment of the present invention. The constitution of the host vehicle MM other than the internal constitution of controller 20 is the same as in Figure 1 explained above, so the same symbols as those adopted above in Figure 1 are used here, and an explanation will not be repeated here.

Controller 20 has host vehicle/obstacle information acquisition part 6, assist information computing part 7, braking force computing part 8, and accelerator reactive force computing part 10.

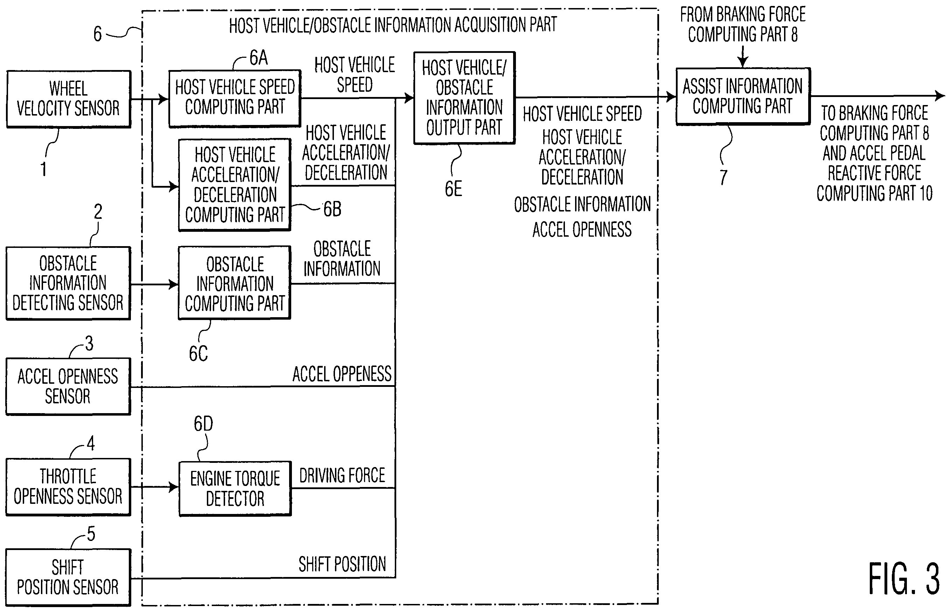

In the following, the contents of host vehicle/obstacle information acquisition part 6, assist information computing part 7, braking force computing part 8 and accelerator reactive force computing part 10 will be explained while referring to Figures 3-6.

Figure 3 is a schematic view of the host vehicle/obstacle information acquisition part of the host vehicle in Figure 1 according to an embodiment of the present invention.

As shown in Figure 3, host vehicle/obstacle information acquisition part 6 has host vehicle speed computing part 6A, host vehicle acceleration/deceleration computing part 6B, obstacle information computing part 6C, engine torque detector 6D, and host vehicle/obstacle information output part 6E.

Based on the various wheel velocities input from various wheel velocity sensors 1, host vehicle speed computing part 6A computes the host vehicle speed, and outputs the computing result to host vehicle/obstacle information output part 6E. Here, the method for computing the host vehicle speed from the wheel velocities of the various wheels is well known. For example, the host vehicle speed may be computed based on the mean value of the various wheel velocities or the lowest value among them and the tire diameter.

Based on the various wheel velocities input from the wheel velocity sensors 1, host vehicle acceleration/deceleration computing part 6B computes acceleration/deceleration A of the host vehicle, and outputs the computed result to the host vehicle/obstacle information output part 6E. While computing the host vehicle speed just as host vehicle speed computing part 6A as mentioned previously, host vehicle acceleration/deceleration computing part 6B differentiates the computed host vehicle speed to compute acceleration/deceleration A of the host vehicle. Here, the following scheme may also be adopted: host vehicle acceleration/deceleration computing part 6B differentiates the host vehicle speed computed by the host vehicle speed computing part 6A to compute acceleration/deceleration A of the host vehicle.

On the basis of the time interval from exit of the laser beam to reception of the reflected light input from the obstacle information detecting sensor 2, the obstacle information computing part 6C determines the obstacle information including the distance (relative distance) between the obstacle ahead of the host vehicle MM and the host vehicle and the relative speed between the host vehicle and the obstacle, and outputs the obtained result of the computing to host vehicle/obstacle information output part 6E.

Based on the throttle operation state input from the throttle operation state sensor 4, engine torque detector 6D computes the output torque of engine 23, and outputs the computed result to the host vehicle/obstacle information output part 6E. The following scheme may also be adopted to determine the output torque of engine 23: a map defining the correlation between the throttle operation state and the output torque is stored beforehand, and, by means of the map, the output torque is determined from the throttle operation state received from throttle operation state sensor 4. In addition, the following scheme may be adopted as well: a numeric equation defining the correlation between the throttle operation state and the output torque is stored beforehand, and, based on the numeric equation, the output torque of engine 23 is determined from the throttle operation state received from throttle operation state sensor 4. That is, the method for computing the output torque of engine 23 may be changed appropriately.

The host vehicle speed, acceleration/deceleration, obstacle information, accelerator operation state, engine torque, and transmission position respectively output from the host vehicle speed computing part 6A, host vehicle acceleration/deceleration computing part 6B, obstacle information computing part 6C, accelerator operation state sensor 3, engine torque detector 6D, and transmission position sensor 5 are input to the host vehicle/obstacle information output part 6E, and it outputs the input information of host vehicle MM and obstacle XM as the host vehicle/obstacle information to assist information computing part 7.

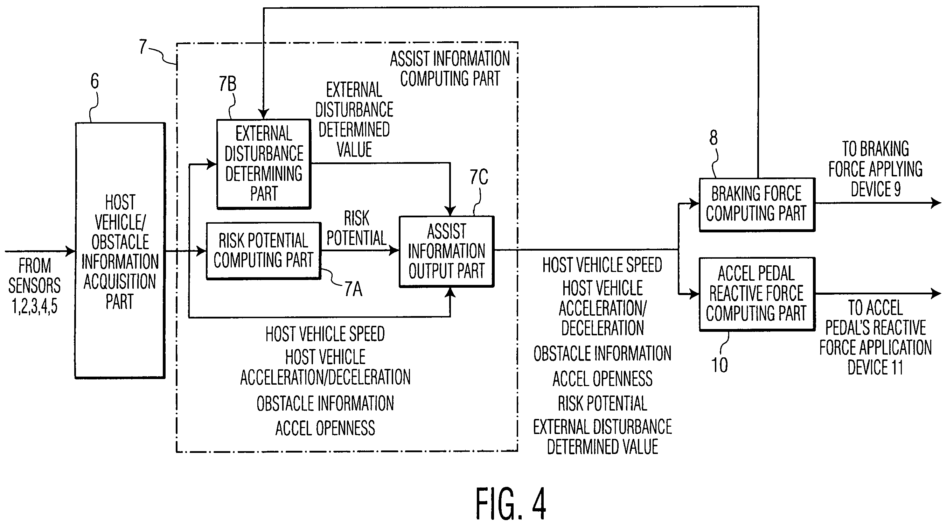

Figure 4 is a schematic view of the assist information computing part of the host vehicle in Figure 1 according to an embodiment of the present invention.

As shown in Figure 4, assist information computing part 7 has risk potential computing part 7A, external disturbance determining part 7B, and assist information output part 7C.

Based on the host vehicle/obstacle information input from host vehicle/obstacle information output part 6E of host vehicle/obstacle information acquisition part 6, risk potential computing part 7A computes the proximity of the host vehicle MM to obstacle XM ahead of host vehicle MM. This proximity is a value indicating the risk potential. More specifically, arrival time TTC for host vehicle MM to reach the position of obstacle XM ahead of the host vehicle MM is computed as the proximity with respect to obstacle XM ahead of host vehicle MM, and the computed arrival time TTC is output to assist information output part 7C.

In this embodiment, arrival time TTC required for host vehicle MM to reach the position of obstacle XM ahead of the host vehicle MM is computed as a value representing the risk potential. Arrival time TTC is a value indicating the proximity, that is, the time for host vehicle MM to reach obstacle XM ahead of the host vehicle MM. Consequently, the shorter the arrival time TTC, the higher the proximity of host vehicle MM to obstacle XM, and the higher the risk potential (the risk degree for host vehicle MM to contact obstacle XM ahead of the host vehicle MM). In the following explanation, arrival time TTC is used as the value representing the risk potential. Here, arrival time TTC is represented by following equation (1).

$$TTC = D\_tar/V\_tar \quad (1)$$

Here,

  D_tar: relative distance to obstacle XM
  V_tar: relative speed with respect to obstacle XM

When arrival time TTC is a value representing the risk potential, the smaller the value of arrival time TTC, the higher the risk potential, and the larger the value of arrival time TTC, the lower the risk potential. In addition, one may also adopt the reciprocal of arrival time TTC as the risk potential.

Then, the risk potential computing part 7A acquires from the host vehicle/obstacle information acquisition part 6 the relative distance D_tar (m) to obstacle XM and the relative speed V_tar (m/s) with respect to obstacle XM, and uses the equation (1) to compute arrival time TTC as a value representing the risk potential.

Here, relative speed V_tar with respect to obstacle XM may be determined by differentiating with respect to time the relative distance D_tar to obstacle XM detected by the obstacle information detecting sensor 2. The following scheme may also be adopted when the obstacle information detecting sensor 2 is constituted by mm-wave radar: the relative speed is computed based on the variation in frequency in the reflected wave with respect to the emitted mm-wave. That is, the method for computing the relative speed is not limited to the scheme.

Based on at least one of the following, the host vehicle/obstacle information input from the host vehicle/obstacle information acquisition part 6, the driving force and the transmission position received from the host vehicle/obstacle information acquisition part 6 and the processing result of computing of the braking force input from the braking force computing part 8, external disturbance determining part 7B determines external disturbance determined value SUB, and outputs the computed external disturbance determined value SUB to assist information output part 7C. In the following, as an example, a scheme for determining an external disturbance based on the host vehicle/obstacle information and the processing result of the braking force computing without using the driving force and the transmission position in Embodiment 1 will be presented. The computing in determining an external disturbance based on the driving force and the transmission position will be explained later with respect to Embodiment 4.

Here, external disturbance determined value SUB in this embodiment is a value determined to represent the degree of external disturbance that suppresses or augments the braking force actually generated in the vehicle when braking is applied on the vehicle under a braking instruction.

For external disturbance determining part 7B in this embodiment, while acceleration/deceleration A (m/s$^2$) of host vehicle MM is input from host vehicle/obstacle information acquisition part 6, the result of judgment on application of a first braking force and braking force instruction value P_brk (Mpa) in the last round of processing, as explained below, are also input from the braking force computing part 8.

Then, external disturbance determining part 7B selects first braking force instruction value P_brk1 as braking force instruction value P_brk by means of braking force computing part 8 to be explained later (a state in which arrival time TTC is in a region from shorter than TTC1 to longer then TTC2, to be explained later, and no braking force is applied is selected), and, when a braking force instruction value P_brk over a preset level is output, it carries out the processing for computing external disturbance determined value SUB. More specifically, for example, when the first braking force instruction value P_brk1 is over a prescribed value of 0.5 MPa, external disturbance determination is carried out. Requiring first braking force instruction value P_brk1 to exceed a prescribed level is for judging whether braking that only allows meaningful computing of external disturbance determined value SUB is applied.

Here, external disturbance determined value SUB is computed using the following listed equation (2).

$$SUB = | (A/P\_brk) * ARMYU| \qquad (2)$$

Here, braking quantity braking force conversion coefficient ARMYU is a conversion coefficient that is set based on the various parameters of the vehicle for converting deceleration (negative acceleration) to a braking hydraulic pressure as to be explained later. Here, braking quantity braking force conversion coefficient ARMYU is for pre-determining the coefficient representing the correlation between the deceleration determined from the wheel velocity and the braking hydraulic pressure by performing experiments with a prescribed vehicle weight, road surface frictional coefficient, braking torque transmission rate from the braking device (braking caliper for a frictional brake) to the wheel, etc. set in a standard state (ideal state).

When computing of external disturbance determined value SUB is not carried out, external disturbance determined value SUB is set at an initial value of "1".

As can be seen from the equation (2), in this embodiment, the higher the level of the external disturbance that suppresses (hampers) the braking force generated in the vehicle according to the braking force instruction value, the smaller value of external disturbance determined value SUB (less than 1). On the contrary, the higher the level of the external disturbance that augments (increases) the actual braking force from the braking force generated in the vehicle according to the braking force instruction value, the larger the value of external disturbance determined value SUB (greater than 1). That is, as compared with the deceleration with respect to the braking hydraulic pressure (braking force) in the standard state when braking quantity braking force conversion coefficient ARMYU is determined, the higher the level of the external disturbance for decreasing the actual deceleration with respect to the braking hydraulic pressure (braking force), the smaller the less than 1 value of external disturbance determined value SUB. On the contrary, the higher the level of the external disturbance for increasing the deceleration with respect to the braking hydraulic pressure, the larger the greater than 1 value of external disturbance determined value SUB.

As far as the external disturbance in this embodiment is concerned, as can be seen from the equation (2), external disturbance determined value SUB indicates the level of influence on the braking driving force generated in host vehicle MM.

The external disturbance refers to an external disturbance including at least one of the braking torque transmission rate, road surface frictional coefficient, and vehicle weight when a braking force is applied on the vehicle. When a braking force is applied by the frictional brake via the wheels on host vehicle MM, the braking torque transmission rate when the braking force is applied on the vehicle corresponds to, e.g., the frictional coefficient of the braking pad.

The assist information output part 7C outputs the information input from host vehicle/obstacle information acquisition part 6, risk potential computing part 7A and external disturbance determining part 7B to the braking force computing part 8 and accelerator reactive force computing part 10.

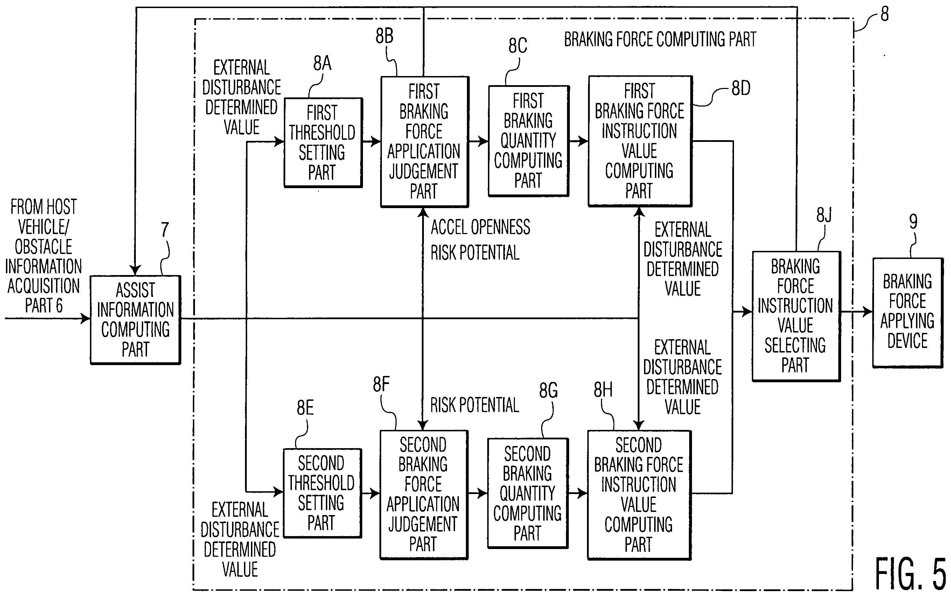

Figure 5 is a schematic view of the braking force computing part of the host vehicle in Figure 1 according to an embodiment of the present invention.

As shown in Figure 5, braking force computing part 8 has first threshold setting part 8A, first braking force application judgment part 8B, first braking quantity computing part 8C, first braking force instruction value computing part 8D, second threshold setting part 8E, second braking force application judgment part 8F, second braking quantity computing part 8G, second braking force instruction value computing part 8H, and braking force instruction value selecting part 8J.

The first threshold setting part 8A sets arrival time threshold TTC1 by taking first threshold Th1 as the risk potential for judging application of a first braking force. Based on external disturbance determined value SUB input from assist information computing part 7, first threshold setting part 8A sets arrival time threshold TTC1 larger when external disturbance determined value SUB is smaller (when the level of the external disturbance hampering braking of host vehicle MM is higher).

More specifically, the first threshold setting part 8A determines arrival time threshold TTC1 by performing a correction treatment so that it is larger when external disturbance determined value SUB computed by the external disturbance determining part 7B is smaller (when the level of the external disturbance for suppressing (hampering) the braking force generated in the vehicle is higher) with respect to arrival time TTC1_0 as a preset prescribed value. Then, arrival time threshold TTC1 determined above is set as first threshold Th1, that is, the risk potential for judging application of a first braking force. More specifically, for example, TTC1_0 is taken as 3, and TTC1 is set in the range of 2.5 to 3.5 by means of a correction treatment.

For example, arrival time threshold TTC1 as first threshold Th1 is computed using the following listed equation (3).

$$TTC1 = TTC1\_0 \times (1/SUB) \quad (3)$$

Also, first braking force application judgment part 8B judges application of the first braking force.

The first braking force application judgment part 8B judges that the first braking force is to be applied when arrival time TTC input from the assist information computing part 7 is shorter than arrival time threshold TTC1 set by first threshold setting part 8A, and the accelerator operation state input from the assist information computing part 7 is also smaller than a preset prescribed value (prescribed accelerator operation state). In other words, it is judged that the first braking force is to be applied when the risk potential of host vehicle MM with respect to obstacle XM is larger than first threshold Th1 (when arrival time TTC is shorter than arrival time threshold TTC1), and when the accelerator operation state is also smaller than a preset prescribed value. If the conditions are not met, it is judged that the first braking force is not to be applied. That is, it is judged that the first braking force is not to be applied even when the risk potential of host vehicle MM with respect to obstacle XM is larger than first threshold Th1 (when arrival time TTC is shorter than arrival time threshold TTC1), as long as the accelerator operation state is larger than the preset prescribed value.

Here, the prescribed value (the prescribed accelerator operation state) refers to the smallest accelerator operation state that can be judged to be that the driver operates the accelerator 22 and intends to accelerate, that is, the smallest accelerator operation state that can be judged to be that the driver intentionally manipulates the accelerator (pressing down). Consequently, when the risk potential of host vehicle MM with respect to obstacle XM is larger than first threshold Th1 and the accelerator operation state input from assist information computing part 7 is smaller than a prescribed value (a prescribed accelerator operation state), it is judged that the driver does not intentionally perform accelerator manipulation, and the first braking force is applied. On the other hand, even when the risk potential of host vehicle MM with respect to obstacle XM is larger than first threshold Th1, as long as the accelerator operation state input from the assist information computing part 7 is larger than a preset prescribed value (prescribed accelerator operation state), it is judged that the driver intended to manipulate the accelerator 22 while knowing the risk potential of host vehicle MM with respect to obstacle XM, and the first braking force is not applied. Here, the prescribed value (prescribed accelerator operation state) is, e.g., an accelerator operation state of 3.4 deg.

Here, as explained above, external disturbance determined value SUB is a value determined when arrival time TTC is shorter than arrival time threshold TTC1, and the first braking force is applied. Consequently, arrival time threshold TTC1 is TTC1\_0 at the time of the first round of processing when arrival time TTC becomes shorter than arrival time threshold TTC1. After that, arrival time TTC becomes longer than arrival time threshold TTC1. Then, when arrival time TTC once again becomes shorter than arrival time threshold TTC1, it is judged that the first braking force is to be applied based on arrival time threshold TTC1 set based on external disturbance determined value SUB.

Then, first braking quantity computing part 8C computes first braking quantity DEC1.

Based on the result of judgment on application of the braking force of the first braking force application judgment part 8B, first braking quantity computing part 8C sets first braking quantity DEC1 as the target value of deceleration. When first braking force application judgment part 8B judges that the first braking force is to be applied, at a preset prescribed increase rate $\alpha$, first braking quantity DEC1 m/s$^2$ is increased until it becomes prescribed brake quantity DEC1\_0 m/s$^2$. More specifically, increase rate $\alpha$ is 2.5 m/s$^2$, and deceleration DEC1\_0 is 2.5 m/s$^2$.

That is, one has

$$\text{first braking quantity } DEC1 = \alpha \times t$$

Here, first braking quantity $DEC1 \leq DEC1\_0$ as first braking quantity DEC1 is set. Here, t represents the time that has lapsed from start of computing of first braking quantity DEC1 by first braking quantity computing part 8C.

When first braking force application judgment part 8B judges that the first braking force is not to be applied, first braking quantity computing part 8C sets first braking quantity DEC1 [m/s$^2$] at 0.

The first braking force instruction value computing part 8D computes the first braking force instruction value.

First of all, the first braking force instruction value computing part 8D sets braking quantity braking force conversion coefficient correction gain $\alpha$\_armyul so that it is larger when external disturbance determined value SUB computed by external disturbance determining part 7B is smaller (when the external disturbance hampering braking is larger). Then, based on first braking quantity DEC1 [m/s$^2$] computed by the first braking quantity computing part 8C, first braking force instruction value computing part 8D uses the following listed equation (4) to compute braking force instruction value P\_brk1 [Mpa].

$$P\_brk1 = DEC1 \times ARMYU \times \alpha\_armyul \qquad (4)$$

Here, braking quantity braking force conversion coefficient ARMYU is a coefficient for converting the braking force instruction value (that is, the target value of the deceleration) to the hydraulic pressure value, and it has a value set in consideration of the various parameters of the vehicle. For example, one may have an ARMYU of 0.8.

The braking quantity braking force conversion coefficient correction gain $\alpha\_armyul$ is set by substituting the reciprocal of the external disturbance determined value SUB with 0.8 as the lower limit and 1.2 as the upper limit. Here, the external disturbance determined value SUB is a value determined when selection is made for the state in which arrival time TTC is shorter than arrival time threshold TTC1 and the first braking force is applied. Consequently, the value of external disturbance determined value SUB at the time when first braking force application judgment part 8B judges that the first braking force is to be applied (that is, the time point when arrival time TTC is shorter than arrival time threshold TTC1) is taken as initial value 1, and the braking quantity braking force conversion coefficient correction gain $\alpha\_armyul$ is set to 1. Then, together with determination of external disturbance determined value SUB, braking quantity braking force conversion coefficient correction gain $\alpha\_armyul$ is corrected and set.

Also, second threshold setting part 8E sets arrival time threshold TTC2 as second threshold Th2, the risk potential for judging a second braking force.

Based on external disturbance determined value SUB input from the assist information computing part 7, second threshold setting part 8E sets arrival time threshold TTC2 so that it is larger when external disturbance determined value SUB is smaller (when the level of the external disturbance that hampers braking of host vehicle MM is higher).

The second threshold setting part 8E in this embodiment determines arrival time threshold TTC2 by a correction treatment so that it is larger when external disturbance determined value SUB computed by the external disturbance determining part 7B is smaller (when the level of the external disturbance that suppresses (hampers) the braking force generated in the vehicle is higher) with respect to arrival time TTC2_0 as a preset prescribed value. Then, arrival time threshold TTC2 is set as second threshold Th2, the risk potential for judging application of the second braking force. More specifically, for example, TTC2_0 is set at 1, and TTC2 is subjected to a correction treatment and is set in the range of 0.8 to 1.2. Here, arrival time threshold TTC2 is set to be smaller than arrival time threshold TTC1.

For example, arrival time threshold TTC2 is computed by means of the following listed equation (5).

$$TTC2 = TTC2\_0 \times (1/SUB) \quad (5)$$

Here, second braking force application judgment part 8F judges application of the second braking force.

The second braking force application judgment part 8F judges that the second braking force is to be applied when arrival time TTC input from assist information computing part 7 is shorter than arrival time threshold TTC2 set at second threshold setting part 8E. In other words, it is judged that the second braking force is to be applied when the risk potential of host vehicle MM with respect to obstacle XM is larger than second threshold Th2 (when arrival time TTC is shorter than arrival time threshold TTC2). On the other hand, when the condition is not met, it is judged that the second braking force is not to be applied.

The second braking quantity computing part 8G computes second braking quantity DEC2.

Based on the result of judgment of application of the braking force of second braking force application judgment part 8F, second braking quantity computing part 8G sets second braking quantity DEC2 as the target value of deceleration. When second braking force application judgment part 8F judges that the second braking force is to be applied, second braking quantity DEC2 [m/s$^2$] is increased at a preset prescribed increase rate $\beta$ until a preset prescribed deceleration DEC2_0 [m/s$^2$].

That is, one has:

$$\text{second braking quantity DEC2} = \beta \times t$$

Here, second braking quantity DEC2 is set with second braking quantity DEC2 $\leq$ DEC2_0. Here, t represents the time that has lapsed from start of computing of second braking quantity DEC2 of second braking quantity computing part 8G.

When second braking force application judgment part 8B judges that the second braking force is not to be applied, second braking quantity computing part 8G sets second braking quantity DEC2 [m/s$^2$] at 0. More specifically, for example, the increase rate $\beta$ is 10.0 m/s$^2$, and DEC2_0 is 5.0 m/s$^2$.

The second braking force instruction value computing part 8H computes the second braking force instruction value.

First of all, second braking force instruction value computing part 8H sets braking quantity braking force conversion coefficient correction gain $\alpha$_armyu2 so that it is larger when external disturbance determined value SUB computed by external disturbance determining part 7B is smaller. Then, based on second braking quantity DEC2 [m/s$^2$] computed by second braking quantity computing part 8G, second braking force instruction value computing part 8H uses the following listed equation to compute braking force instruction value P_brk2 [Mpa].

$$P\_brk2 = DEC2 \times ARMYU \times \alpha\_armyu2 \qquad (6)$$

Here, braking quantity braking force conversion coefficient ARMYU is a coefficient for converting the braking force instruction value (target value of deceleration) to the hydraulic pressure value, and it is set according to the various parameters of the vehicle. For example, ARMYU is taken as 0.8.

The braking quantity braking force conversion coefficient correction gain $\alpha$_armyu2 is set by substituting the reciprocal of external disturbance determined value SUB with 0.8 as the lower limit and 1.2 as the upper limit.

The braking force instruction value selecting part 8J takes one of first braking force instruction value P_brk1 computed by the first braking force instruction value computing part 8D and second braking force instruction value P_brk2 computed by the second braking force instruction value computing part 8H, whichever is larger, as braking force instruction value P_brk. Then, braking force instruction value selecting part 8J outputs the result of selection of the braking force instruction value P_brk to the braking force applying device 9 (braking hydraulic pressure controlling part 29) and the assist information computing part 7.

$$P\_brk = MAX(P\_brk1, P\_brk2) \qquad (7)$$

The braking force applying device 9 has braking force instruction value P_brk output from braking force computing part 8 to braking hydraulic pressure controlling part 29, and, based on braking force instruction value P_brk that is input, braking hydraulic pressure controlling part 29 controls the actuator in hydraulic circuit 27, and has a braking force applied on each wheel 30. Here, the actuator in hydraulic circuit 27 may be a hydraulic brake actuator (wheel cylinder or the like) that can apply hydraulic pressure on the piston in the brake caliper arranged on each wheel 30.

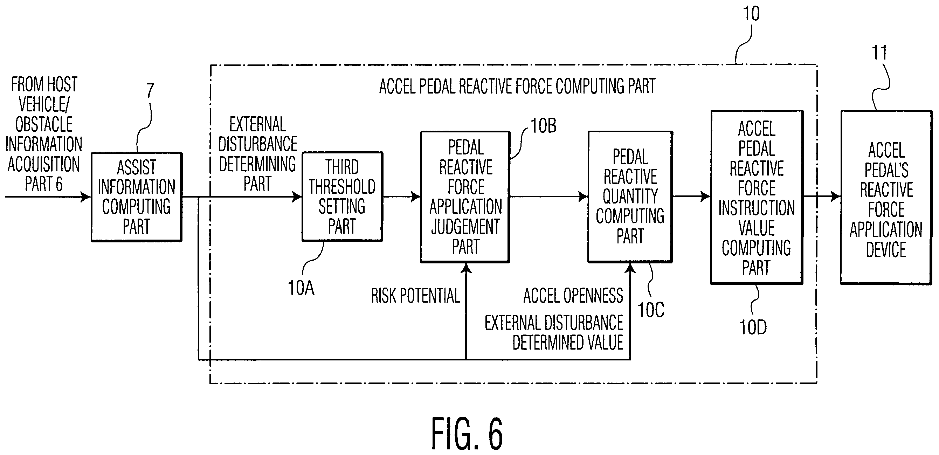

Figure 6 is a schematic view of the accelerator reactive force computing part of the host vehicle in Figure 1 according to an embodiment of the present invention.

As shown in Figure 6, accelerator reactive force computing part 10 has third threshold setting part 10A, accelerator reactive force application judgment part 10B, accelerator reactive force quantity computing part 10C, and accelerator reactive force instruction value computing part 10D.

The third threshold setting part 10A sets arrival time threshold TTC3 as third threshold Th3, the risk potential for judging application of the accelerator reactive force.

Based on external disturbance determined value SUB input from the assist information computing part 7, third threshold setting part 10A sets arrival time threshold TTC3 so that the arrival time threshold TTC3 becomes larger when external disturbance determined value SUB is smaller (when the level of the external disturbance hampering braking of host vehicle MM is higher).

The third threshold setting part 10A in this embodiment determines arrival time threshold TTC3 by means of correction so that it is larger when external disturbance determined value SUB is smaller with respect to arrival time TTC3_0, a preset prescribed value. Then, the arrival time has TTC3 set. More specifically, TTC3_0 is set at 3, and TTC3 is set in the range of 2.5 to 3.5 by means of a correction treatment.

For example, arrival time threshold TTC3 is computed using the following listed equation (8).

$$TTC3 = TTC3\_0 \times (1/SUB) \qquad (8)$$

Here, arrival time threshold TTC3 is set so that it is larger than arrival time threshold TTC2. In addition, it is preferred that arrival time threshold TTC3 be set to exceed arrival time threshold TTC1. When arrival time threshold TTC3 is set to exceed arrival time threshold TTC1, one may set to have TTC3=TTC1+TTC4. Here, TTC4 may be any prescribed value larger than zero.

The accelerator reactive force application judgment part 10B judges application of the accelerator reactive force. When arrival time input from the assist information computing part 7 is shorter than threshold TTC3 set at the third threshold setting part 10A, it judges that an accelerator reactive force is to be applied. In other words, when the risk potential of host vehicle MM with respect to obstacle XM is over third threshold Th3 (when arrival time TTC is shorter than arrival time threshold TTC3), it is judged that an accelerator reactive force is to be applied. On the other hand, when the condition is not met, it is judged that an accelerator reactive force is not to be applied.

Here, external disturbance determined value SUB is the value determined when arrival time TTC is shorter than arrival time threshold TTC1 and when the state of application of the first braking force is selected. Consequently, arrival time threshold TTC3 is TTC3_0 at the time of the first round of processing when arrival time TTC becomes shorter than arrival time threshold TTC3, and after that, arrival time TTC becomes longer than arrival time threshold TTC3. When arrival time TTC once again becomes shorter than arrival time threshold TTC3, it is judged that the accelerator reactive force is to be applied based on arrival time threshold TTC3 set based on external disturbance determined value SUB.

The accelerator reactive force quantity computing part 10C computes the accelerator reactive force.

The accelerator reactive force quantity computing part 10C computes the accelerator reactive force so that it is larger when the accelerator operation state is larger. More specifically, the accelerator reactive force is computed in the range of 20-25 N. Here, the accelerator reactive force is a reactive force that allows driver operation of the accelerator intentionally, and allows the driver to notice variation in the accelerator reactive force.

The accelerator reactive force instruction value computing part 10D computes an accelerator reactive force instruction value, and outputs it to accelerator reactive force application device 11.

In this embodiment, after the accelerator reactive force application judgment part 10B judges that the accelerator reactive force is to be applied, the accelerator reactive force instruction value is increased at a preset prescribed increase rate. After the accelerator reactive force instruction value reaches the accelerator reactive force, the accelerator reactive force instruction value is kept until the accelerator operation state input from the assist information computing part 7 becomes 0.

On the other hand, when accelerator reactive force application judgment part 10B judges that no accelerator reactive force is to be applied, and an accelerator reactive force instruction value other than 0 was output in the last round of processing, the accelerator reactive force instruction value is decreased to 0 at a prescribed decrease rate. Then, the accelerator reactive force instruction value is set at 0 until accelerator reactive force application judgment part 10B judges that an accelerator reactive force is to be applied.

More specifically, for example, the increase rate of the accelerator reactive force instruction value is set at 7.5 N/sec, and the decrease rate is set at 30 N/sec.

Here, in the above explanation, for risk potential computing part 7A, arrival time TTC is taken as a value indicating the risk potential. However, one may also adopt a scheme in which another value indicating the proximity of host vehicle MM to obstacle XM is taken as the value representing the risk potential. More specifically, the relative distance to obstacle XM may be taken as the value indicating the risk potential. For example, if the relative distance to obstacle XM is larger (the proximity is lower), the risk potential is lower. On the other hand, if the relative distance to obstacle XM is smaller (the proximity is higher), the risk potential is higher. Consequently, the thresholds (relative distance thresholds) corresponding to first threshold Th1, second threshold Th2 and third threshold Th3 are set based on the relative distance to obstacle XM. More specifically, for first threshold Th1, the relative distance threshold is set at 7 m; for second threshold Th2, the relative distance threshold is set at 4 m; and, for third threshold Th3, the relative distance threshold is set at 8 m. Then, when the relative distance between host vehicle MM and obstacle XM is smaller than each threshold, it is judged that the risk potential is larger than the risk potential represented by the threshold.

Also, risk potential computing part 7A may take the distance computed by the following listed equation (9) as the value representing the risk potential.

$$\text{Distance} = \text{brake reaction distance} + \text{deceleration distance} + \text{margin distance} \qquad (9)$$

Here, the brake reaction distance to obstacle XM has a value obtained by multiplying a prescribed initial brake reaction time by relative speed V_tar. More specifically, the initial brake reaction time is set at 1 sec.

The deceleration distance refers to the distance from the time when the braking force is applied to the time when relative speed V_tar with respect to obstacle XM becomes 0, and it is computed using the following listed equation.

$$\text{Deceleration distance} = (\text{relative speed V\_tar}) + (\text{assumed deceleration}^2)/(\text{assumed deceleration change rate} \times 2)/(\text{assumed deceleration} \times 2) - (\text{assumed deceleration})^2/(\text{assumed deceleration change rate}^2 \times 6) \qquad (10)$$

More specifically, for example, the assumed deceleration is set at 5 m/s², and the assumed deceleration change rate is set at 10 m/s². Here, as an example, the margin distance is taken as 3 m.

Here, the assumed deceleration has a prescribed value. However, one may also adopt a scheme in which the deceleration distance is computed based on the acceleration/deceleration of host vehicle MM received from host vehicle/obstacle information acquisition part 6.

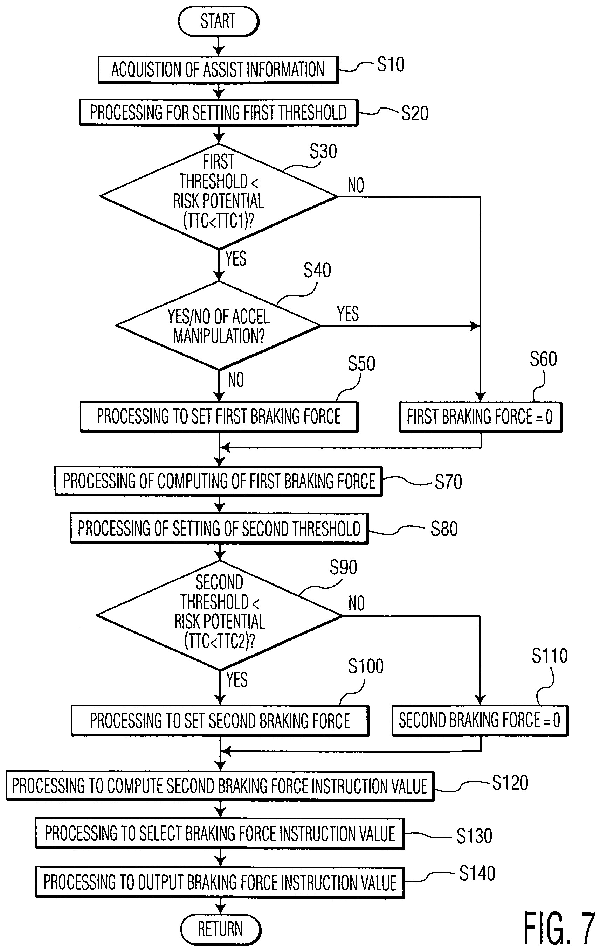

In the following, the processing of the braking force computing part 8 will be explained with reference to Figure 7.

Here, the processing of braking force computing part 8 is executed at a preset sampling period. First, in step S10, the information of external disturbance determined value SUB and the risk potential, etc. needed for computing is acquired from assist information computing part 7.

Then, in step S20, first threshold setting part 8A sets first threshold Th1.

Then, in step S30, first braking force application judgment part 8B judges whether the risk potential of host vehicle MM with respect to obstacle XM is higher than the risk potential represented by first threshold Th1. More specifically, judgment is made on whether arrival time TTC is shorter than arrival time threshold TTC1. If the condition is met, the flow goes to step S40. If NOT, the flow goes to step S60.

In step S40, first braking force application judgment part 8B judges whether the driver operates the accelerator 22. More specifically, judgment is made on whether the actual accelerator operation state exceeds a prescribed accelerator operation state that allows judgment on intentional accelerator operation by the driver. If the driver operates accelerator 22, the flow goes to step S60. If NOT, the flow goes to step S50.

In step S50, first braking quantity computing part 8C computes the first braking quantity. Then, the flow goes to step S70.

In step S60, first braking quantity computing part 8C sets the first braking quantity at 0. Then, the flow goes to step S70.

In step S70, first braking force instruction value computing part 8D computes the first braking force instruction value based on the first braking quantity.

Then, in step S80, second threshold setting part 8E sets second threshold Th2.

Then, in step S90, second braking force application judgment part 8F judges whether the risk potential of host vehicle MM with respect to obstacle XM ahead of the host vehicle MM is higher than the risk potential represented by second threshold Th2. More specifically, judgment is made on whether arrival time TTC is shorter than TTC2. If the condition is met, the flow goes to step S100. If NOT, the flow goes to step S110.

In step S100, second braking quantity computing part 8G computes the second braking quantity. Then, the flow goes to step S120.

In step S110, second braking quantity computing part 8G sets the second braking quantity at 0. Then, the flow goes to step 120.

In step S120, second braking force instruction value computing part 8H computes the second braking force instruction value based on the second braking quantity.

Then, in step S130, braking force instruction value selecting part 8J selects one of the first braking force instruction value and the second braking force instruction value, whichever is larger, as the final braking force instruction value.

Then, in step S140, braking force instruction value selecting part 8J outputs the braking force instruction value selected in step S130 to braking force applying device 9 (braking hydraulic pressure controlling part 29). Then, the flow returns.

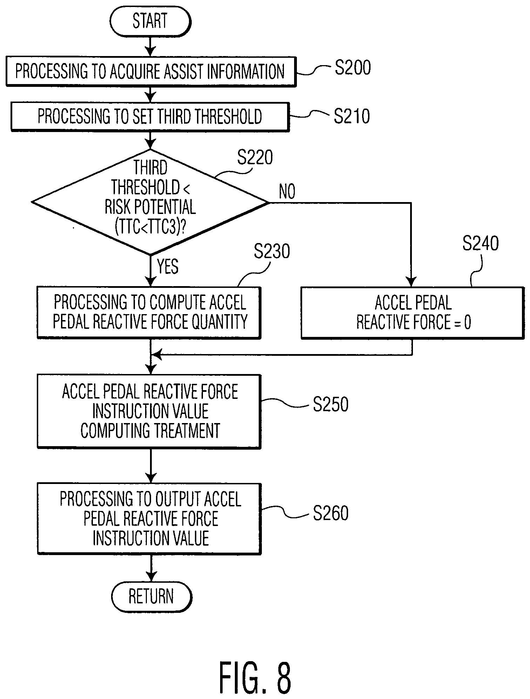

In the following, the processing of the accelerator reactive force computing part 10 will be explained with reference to Figure 8.

The processing of accelerator reactive force computing part 10 is executed at a preset sampling period. First of all, in step S200, the information of external disturbance determined value SUB and arrival time TTC, etc. needed for computing is acquired from assist information computing part 7.

Then, in step S210, third threshold setting part 10A sets third threshold Th3.

Then, in step S220, accelerator reactive force application judgment part 10B judges whether the risk potential of host vehicle MM with respect to obstacle XM ahead of the host vehicle MM is higher than the risk potential represented by third threshold Th3. More specifically, judgment is made on whether arrival time TTC is shorter than arrival time threshold TTC3. When the condition is met, the flow goes to step S230. If NOT, the flow goes to step S240.

In step S230, accelerator reactive force quantity computing part 10C computes the accelerator reactive force quantity applied on accelerator 22. Then, the flow goes to step S250.

In step S240, accelerator reactive force quantity computing part 10C sets the accelerator reactive force quantity at 0, and the flow then goes to step S250.

In step S250, accelerator reactive force instruction value computing part 10D computes the accelerator reactive force instruction value. Then, in step S260, the computed accelerator reactive force instruction value is output to accelerator reactive force application device 11. Then, the flow returns.

Operation, etc.

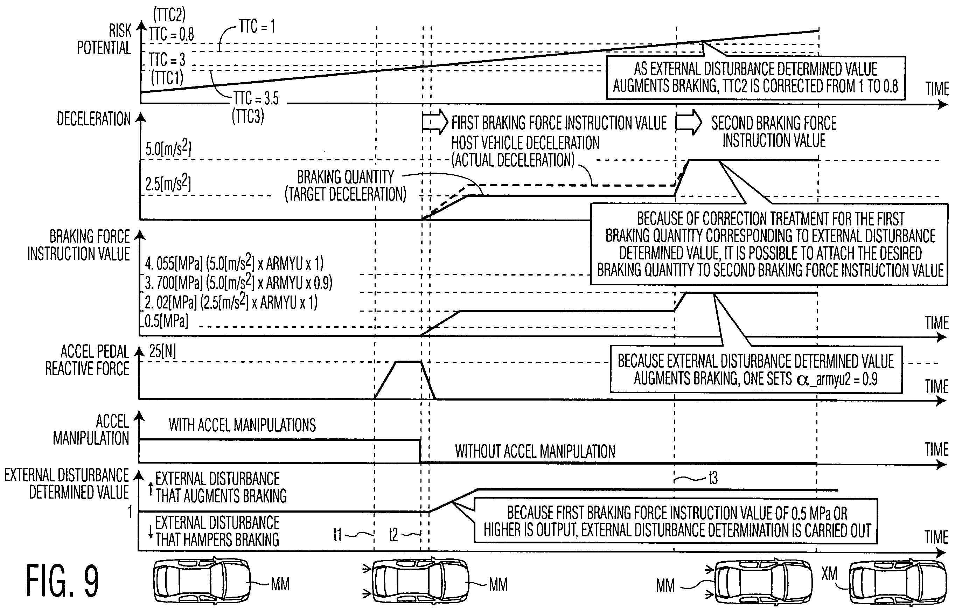

Figure 9 is a time chart illustrating Embodiment 1 of the present invention.

As shown in Figure 9, when the risk potential of host vehicle MM with respect to obstacle XM ahead of the host vehicle MM exceeds the risk potential represented by third threshold Th3, that is, when arrival time TTC becomes shorter than arrival time threshold TTC3 (time t1), an accelerator reactive force is applied, so that the driver is prompted to release the accelerator 22.

In addition, when the risk potential of host vehicle MM with respect to obstacle XM ahead of the host vehicle MM is higher than the risk potential represented by first threshold Th1, that is, when arrival time TTC becomes shorter than arrival time threshold TTC1 (time t2), a braking force corresponding to the first braking force instruction value is applied on the vehicle only if the driver does not operate accelerator 22.

In this way, a braking force is applied by the first braking force applying means only when accelerator 22 is not manipulated. In this way, a braking force is applied only when the driver does not intend to accelerate. As a result, braking is assisted only when minimal discomfort will be felt by the driver when a braking force is applied.

Then, when the risk potential of host vehicle MM with respect to obstacle XM ahead of the host vehicle MM exceeds the risk potential represented by second threshold Th2, that is, when arrival time TTC becomes shorter than arrival time threshold TTC2 (time t3), a braking force corresponding to the second braking force instruction value is applied on the vehicle irrespective of the operation state of the accelerator 22. Here, the second braking force instruction value is set to be higher than the first braking force instruction value.

As a result, braking is carried out by the second braking force instruction value irrespective of the operation state of the accelerator 22, so that a braking force is applied reliably, and the driving operation of the driver can be assisted.

By setting the risk potential represented by third threshold Th3 at a value smaller than the risk potential represented by first threshold Th1 (by setting arrival time threshold TTC3 at a value that exceeds arrival time threshold TTC1), an accelerator reactive force is applied, so that it is possible to determine the intention of the driver in oeprating the accelerator 22, before a braking force is applied based on the first braking force instruction value, so it is possible to determine the intention of the driver at a more effective timing.

That is, as explained above, the driver who fails to determine the risk with respect to obstacle XM is assisted by means of the accelerator reactive force. In this case, when the driver has an intention of deceleration, the accelerator reactive force prompts the driver to release the accelerator 22. Then, at the same time or subsequently, braking is applied based on the first braking force instruction value, so that it is possible to efficiently assist braking minimal discomfort.

On the other hand, when the driver has no intention to decelerate, accelerator 22 is not released although there is an accelerator reactive force. In this way, it is possible to suppress application of the braking force by the first braking force application means in a scenario that when applying a braking force would cause discomfort.

Also, corresponding to external disturbance determined value SUB, correction is made for the values set or computed by the first threshold setting part 8A, first braking force application judgment part 8D, second threshold setting part 8E, second braking quantity computing part 8G, and third threshold setting part 10A. As a result, in the case where the external disturbance hampers braking (when the deceleration actually generated in the vehicle decreases with respect to the braking hydraulic pressure due to the external disturbance), it is possible to assist with an appropriate braking quantity at a quicker timing. In the example shown in Figure 9, it is determined that an external disturbance augmenting braking is generated based on the external disturbance when first braking quantity DEC1 is generated (the deceleration actually generated in the vehicle with respect to a braking hydraulic pressure increase due to the external disturbance). In this case, based on external disturbance determined value SUB, the first braking instruction value is corrected to become smaller, and, at the same time, correction is carried out so that the risk potential represented by second threshold Th2 becomes higher (so that arrival time threshold TTC2 becomes lower). In the example shown in Figure 9, the value of second threshold Th2 is corrected from 1 to 0.8. As a result, when the risk potential of host vehicle MM with respect to obstacle XM is higher, it is possible to apply a braking quantity as the target of the second braking force application means.

Also, by determining an external disturbance that influences the braking quantity generated by the braking force based on the wheel velocity and braking force of host vehicle MM in external disturbance determining part 7B, it is possible to determine an external disturbance caused by, e.g., pad friction $\mu$ at the frictional brake, road surface friction $\mu$, vehicle weight, etc.

Also, by determining an external disturbance when a braking force is applied based on the first braking force instruction value in external disturbance determining part 7B, it is possible to determine an external disturbance pertaining to the braking force based on the second braking force instruction value more correctly. That is, by correcting second threshold Th2 (arrival time threshold TTC2) and second braking force instruction value P_brk2 based on an external disturbance when the braking force is applied based on the first braking force instruction value, it is possible to apply the braking force with the second braking force application means more appropriately.

Here, in this embodiment, external disturbance determined value SUB is computed based on the acceleration/deceleration that is determined based on the wheel velocity and the braking force instruction value. That is, external disturbance determined value SUB is computed based on the braking force instruction value and the acceleration/deceleration determined based on the wheel velocity. Usually, the friction included between the braking force application mechanism that generates the braking force by the braking hydraulic pressure and the wheel is very small. Thus, by computing external disturbance determined value SUB based on the braking force instruction value and the wheel velocity, it is possible to determine external disturbance determined value SUB at a high precision.

Here, risk potential computing part 7A forms the risk potential computing means, and accelerator operation state sensor 3 forms the accelerator detecting means. The first braking force application means is composed of first threshold setting part 8A, first braking force application judgment part 8B, first braking quantity computing part 8C, first braking force instruction value computing part 8D, braking force instruction value selecting part 8J, and braking force applying device 9. The second braking force application means is composed of second threshold setting part 8E, second braking force application judgment part 8F, second braking quantity computing part 8G, second braking force instruction value computing part 8H, braking force instruction value selecting part 8J, and braking force applying device 9. The accelerator reactive force application means is made of accelerator reactive force computing part 10. The external disturbance determining means is made of external disturbance determining part 7B. The first through fourth correction means are made of first braking force instruction value computing part 8D and second braking force instruction value computing part 8H.

Effect of this embodiment

(1) The risk potential computing means computes the risk potential of host vehicle MM with respect to obstacle XM ahead of the host vehicle MM. The first braking force application means applies a braking force on host vehicle MM when the computed risk potential is higher than the preset first threshold and it is judged that the accelerator 22 is not operated based on detection of the accelerator detection means. The second braking force application means applies a braking force on host vehicle MM irrespective of the operation state of the accelerator 22 when the risk potential computed by the risk potential computing means exceeds the second threshold that is higher than the first threshold.

As a result, when the risk potential is higher than the second threshold with respect to obstacle XM ahead of the host vehicle MM, braking is reliably applied to assist. On the other hand, when the risk potential is between the first threshold, which is lower than the second threshold, and the second threshold, the braking force is applied only when the driver has no intention to accelerate. As a result, it is possible to assist braking only when minimal discomfort will be felt when a braking force is applied corresponding to the intention of the driver.

As a result, it is possible to appropriately assist driving by braking the host vehicle with respect to obstacle XM ahead of the host vehicle MM in a manner corresponding to the intention of the driver.

(2) The accelerator reactive force application means applies a reactive force to the accelerator when it is judged that the risk potential determined by the risk potential computing means is higher than a preset third threshold.

As a result, an accelerator reactive force is applied for the driver who fails to know the risk with respect to obstacle XM, so that the driver is notified of the high risk potential, and, at the same time, the driver is prompted to release the accelerator 22, so that driving can be assisted.

Here, after it is found that the driver has released the accelerator 22 and shows an intention of deceleration upon the accelerator reactive force, braking can be carried out based on the first braking force instruction value. As a result, it is possible to carry out efficient assistance with an even lower feeling of discomfort. On the other hand, when the driver has an intention to accelerate, he/she can continue operating the accelerator 22 to accelerate irrespective of the accelerator reactive force. As a result, it is possible to not apply the braking force in a when application of a braking force would cause discomfort.

(3) The risk potential represented by the third threshold is equal to or lower than the risk potential represented by the first threshold.

Since the risk potential represented by the third threshold is set lower than the risk potential represented by the first threshold, it is possible to apply an accelerator reactive force at the same time or earlier than start of application of braking based on the first braking force instruction value. As a result, it is possible to determine the intention of the driver and start application of braking based on the first braking force instruction value.

(4) The risk potential computing means computes the proximity as the value representing the risk potential with respect to the obstacle XM. Based on the proximity computed by the risk potential computing means, the first braking force application means and the second braking force application means judge that the risk potential of the host vehicle with respect to the obstacle in the travelling direction of the host vehicle is higher than the first threshold as the preset risk potential, and that it is also higher than the second threshold as the preset risk potential.

By having the value representing the risk potential as the proximity with respect to obstacle XM, it is possible to appropriately assist with minimal driver discomfort.

(5) The risk potential computing means computes the proximity based on at least one of the following parameters: relative distance between host vehicle MM and obstacle XM, relative speed between obstacle XM and host vehicle MM, and the relative acceleration/deceleration between host vehicle MM and obstacle XM.

Since the proximity is computed based on at least one of the relative distance, relative speed and relative acceleration/deceleration between the host vehicle MM and the obstacle XM, the risk potential is determined based on a physical quantity, and it is possible to set the risk potential similar to that based on the comfort level of the driver.

(6) The risk potential computing means computes the risk potential based on the arrival time determined for host vehicle MM to reach the position of obstacle XM.

By judging the possibility of assistance by means of the risk potential based on the arrival time to obstacle XM, it is possible to perform assist at a timing with minimal discomfort.

(7) The external disturbance determining means determines an external disturbance that influences braking applied on host vehicle MM. Here, when there is a high level of suppression of braking applied on host vehicle MM due to an external disturbance determined by the external disturbance determining means, the first correction means compares this with the case when the suppression level is lower, and has at least one of the first threshold and second threshold corrected to a lower level of risk potential.

In the state in which the external disturbance hampers braking, assistance can be carried out at a quicker timing. In the state in which the external disturbance augments braking, assistance can be carried out at a slower timing. Thus, it is possible to carry out assistance to driving at an appropriate timing corresponding to the external disturbance.

(8) When there is a high level of suppression of braking applied on host vehicle MM due to an external disturbance determined by the external disturbance determining means, the second correction means compares this with the case when the suppression level is lower, and has the third threshold corrected to a lower level of risk potential.

In the state in which the external disturbance hampers braking, assistance can be carried out at a quicker timing. In the state in which the external disturbance augments braking, assistance can be carried out at a slower timing. Thus, it is possible to carry out assist to driving at an appropriate timing corresponding to the external disturbance.

(9) When there is a high level of suppression of braking applied on host vehicle MM due to an external disturbance determined by the external disturbance determining means, the third correction means compares this with the case when the suppression level is lower, and has the braking force applied by the first braking force application means or the second braking force application means corrected to be larger.

It is possible to perform assistance by an appropriate braking quantity corresponding to either hampering or augmenting of braking by the external disturbance.

(10) When there is a high level of suppression of braking applied on host vehicle MM due to an external disturbance determined by the external disturbance determining means, the fourth correction means compares this with the case when the suppression level is lower, and has the reactive force applied by the accelerator reactive force application means corrected to be larger.

It is possible to perform assistance by an appropriate accelerator reactive force corresponding to either hampering or augmenting of braking by the external disturbance.

(11) When a braking force is applied by the first braking force application means, the external disturbance determining means determines the external disturbance. Then, based on the external disturbance determined by the external disturbance determining means, at least one of the second threshold and the braking force applied by the first braking force application means is corrected.

Corresponding to the external disturbance determined when the braking force is applied by the first braking force application means, at least one of the second threshold and the braking force by the first braking force application means is corrected. Thus, in the state when the risk potential is higher than the second threshold, application of braking by the second braking force application means is started at an appropriate timing, or the braking force can be set at a more appropriate value by the first braking force application means.

(12) Based on the acceleration/deceleration computed based on the wheel velocity of host vehicle MM and the braking force instruction value for host vehicle MM, the external disturbance determining means determines the external disturbance.

Modified examples

(1) Based on the constitution of Embodiment 1, the second ~ fourth constitutions to be explained below can be incorporated appropriately.

(2) In the Embodiment 1, as an example, all of the thresholds, that is, first threshold Th1, second threshold Th2, and third threshold Th3, are corrected corresponding to external disturbance determined value SUB. However, the present invention is not limited to this scheme. One may also adopt a scheme in which one or two of first threshold Th1, second threshold Th2 and third threshold Th3 is/are corrected.

(3) In the Embodiment 1, as an example, both first braking force instruction value P_brk1 and second braking force instruction value P_brk2 are corrected corresponding to external disturbance determined value SUB. However, the present invention is not limited to the scheme. One may also adopt a scheme in which only one of first braking force instruction value P_brk1 and second braking force instruction value P_brk2 is corrected corresponding to external disturbance determined value SUB.

(4) In the Embodiment 1, as an example, first threshold Th1, second threshold Th2, third threshold Th3, first braking force instruction value P_brk1 and second braking force instruction value P_brk2 are corrected corresponding to external disturbance determined value SUB. However, the present invention is not limited to the scheme. For example, the following appropriately adjusted schemes may also be adopted: one or several of first threshold Th1, second threshold Th2 and third threshold Th3 is/are corrected, or only one of first braking force instruction value P_brk1 and second braking force instruction value P_brk2 is corrected, or one or several of first threshold Th1, second threshold Th2 and third threshold Th3 as well as one or both of first braking force instruction value P brkl and second braking force instruction value P_brk2 are corrected.

Embodiment 2

In the following, Embodiment 2 of the present invention will be explained with reference to figures. Here, the same symbols as those above in Embodiment 1 will be adopted in the explanation.

The fundamental constitution of this embodiment is the same as that of Embodiment 1. However, this embodiment differs from Embodiment 1 in that the risk potential is computed based on a picture taken of the scene ahead of the host vehicle MM. More specifically, from the information of obstacle XM with its image included in the picture that has been taken, the proximity to obstacle XM is computed. That is, the influence of obstacle XM with its image included in the picture that is taken is computed as a value representing the risk potential.

That is, in this embodiment, obstacle information computing part 6C is constituted by a camera or other picture taking means. Here, the picture taking means is arranged in front of host vehicle MM for taking pictures ahead of the vehicle.

In this embodiment, risk potential computing part 7A computes the proximity (that is, the value representing the risk potential) from the proportion of obstacle XM on the picture taken of the scene ahead of the host vehicle MM. For example, the proportion of the target image on the image area is computed as the proximity. Here, for a picture taken by the picture taking means, risk potential computing part 7A adopts a preset picture frame, and the proportion of obstacle XM ahead of the host vehicle MM within the picture frame is computed as the proximity.

Here, obstacles XM located outside the lane of the host vehicle MM may also be taken within the picture frame. In this case, processing for recognizing the lane of the host vehicle in the picture is carried out, and processing is carried out to exclude obstacles XM located outside the lane of the host vehicle MM from obstacle XM which is inside the lane of he host vehicle MM and used to compute the proportion. For example, recognition of the lane of the host vehicle may be carried out by judging white mark lines and the road shoulder, etc. Also, recognition of the lane of the host vehicle may be carried out by predicting the travelling path of the host vehicle based on the behavior of host vehicle MM (the lateral acceleration, steering angle, etc. applied on host vehicle MM), and recognizing the lane by means of the predicted travelling path.

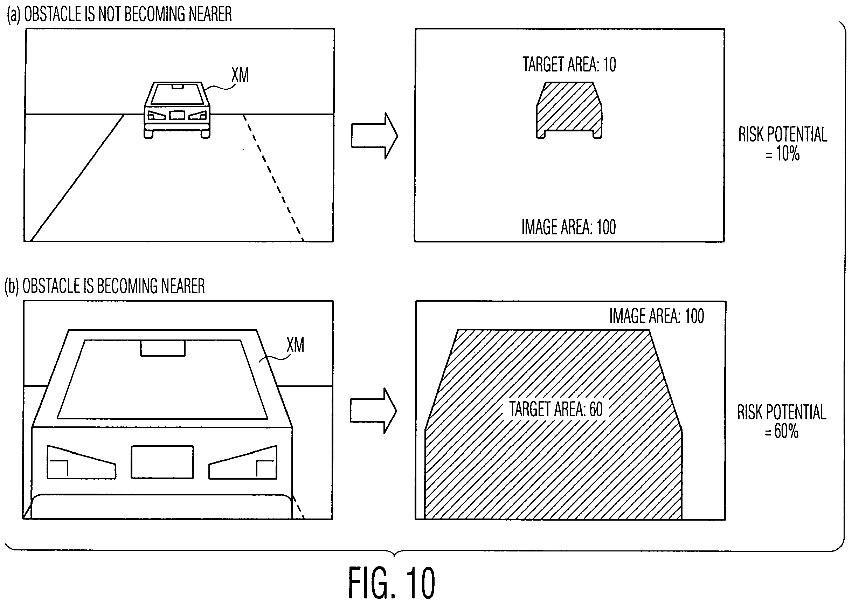

When a picture is taken for the same obstacle XM, and when host vehicle MM does not approach obstacle XM, the proportion of obstacle XM in the picture frame (proportion) becomes smaller as shown in Figure 10(a). On the other hand, when host vehicle MM approaches obstacle XM, the proportion becomes larger as shown in Figure 10(b).

Consequently, in this embodiment, the larger the proximity of the host vehicle to obstacle XM, that is, the larger the risk potential, the larger the proportion.

The thresholds for the proportion of obstacle XM on the picture ahead of the host vehicle MM are set by means of the first threshold setting part 8A, second threshold setting part 8E, and third threshold setting part 10A.

More specifically, the initial value of first threshold Th1 is set at 45%, the initial value of second threshold Th2 is set at 60%, and the initial value of third threshold Th3 is set at 45%.

Just like Embodiment 1, first threshold Th1, second threshold Th2 and third threshold Th3 are corrected based on external disturbance determined value SUB. That is, the various thresholds are corrected so that the larger the external disturbance that hampers braking, the larger the risk potential represented by each threshold (the larger each threshold), and the various thresholds are corrected so that the larger the external disturbance that augments braking, the smaller the risk potential represented by each threshold (the smaller each threshold).

The remaining features of the constitution are the same as those in the Embodiment 1.

Here, in the embodiment, the proportion of obstacle XM in the area of the picture is computed as the proximity (that is, as the value indicating the risk potential). However, the present invention is not limited to the scheme. One may also adopt a scheme in which the area of obstacle XM as a picture taken of itself is taken as the proximity, or the width of obstacle XM as a picture taken is taken as the proximity.

Operation, etc.

In this embodiment, the risk potential is determined by detecting the proximity to obstacle XM based on a picture taken of the scene ahead of the host vehicle MM. In this way, according to this embodiment, there is no need to use a device to detect the distance to obstacle XM, and assistance can be carried out with a picture taking means that takes a picture of the scene ahead of the host vehicle MM.

Effect of the embodiment

(1) The picture taken of the scene ahead of the host vehicle MM is obtained with the picture taking means. The risk potential computing means determines the proximity based on obstacle XM included in the picture taken by the picture taking means, and the risk potential is computed.

It is possible to set the risk potential as a value similar to the viewing state of the driver for obstacle XM.

Embodiment 3

In the following, Embodiment 3 will be explained with reference to figures. Here, the same symbols as those above in Embodiments 1 and 2 are adopted in the explanation for this embodiment.

The fundamental constitution of this embodiment is the same as that of the Embodiment 1.

However, this embodiment differs from Embodiment 1 in the method for determining the external disturbance by the external disturbance determining part and in the method for correcting the first braking quantity and the second braking quantity corresponding to the determined external disturbance.

In this embodiment, external disturbance determining part 7B determines the external disturbance from acceleration/deceleration A $[m/s^2]$ of host vehicle MM input from host vehicle/obstacle information acquisition part 6 and braking force instruction value P_brk0 [Mpa]. Assuming that the braking quantity braking force conversion coefficient used by first braking force instruction value computing part 8D is ARMYU, the following listed equation is used to compute external disturbance determined value SUB.

$$SUB = (P\_brk0/ARMYU) - A \qquad (11)$$

That is, external disturbance determined value SUB is computed from the difference between the braking force (braking hydraulic pressure) according to the braking force instruction value and the actual acceleration/deceleration.

When external disturbance determined value SUB is not computed, external disturbance determined value SUB is set at 0.

Here, as can be seen from equation (11), external disturbance determined value SUB shows the level of influence of the external disturbance on the braking force generated in host vehicle MM.

The external disturbance includes at least one of the road slope and the air drag.

In this embodiment, if the external disturbance that influences the braking quantity that generates the braking force is an external disturbance that augments braking (that is, an external disturbance that increases the deceleration with respect to the braking hydraulic pressure), external disturbance determined value SUB is a value smaller than 0. On the other hand, if the external disturbance that influences the braking quantity that generates the braking force is an external disturbance that hampers braking (that is, an external disturbance that decreases the deceleration with respect to the braking hydraulic pressure), external disturbance determined value SUB is a value larger than 0.

Here, first braking quantity computing part 8C sets a larger value of braking quantity correction quantity $\beta$_dec1 when external disturbance determined value SUB computed by the external disturbance determining part 7B is larger (when the external disturbance that hampers braking is larger). Then, first braking quantity DEC1 is computed by adding the braking quantity correction quantity $\beta$_dec1 to preset prescribed deceleration DEC1_0.

$$DEC1 = DEC1\_0 + \beta\_dec1 \qquad (12)$$

More specifically, braking quantity correction quantity $\beta$_dec1 is set by substituting the value of external disturbance determined value SUB, with -2.5 m/s$^2$ as the lower limit and with 2.5 m/s$^2$ as the upper limit.

Here, based on first braking quantity DEC1 computed by the first braking quantity computing part 8C, first braking force instruction value computing part 8D uses the following listed equation to compute first braking force instruction value P_brk1.

$$P\_brk1 = DEC1 \times ARMYU \quad (13)$$

Here, braking quantity braking force conversion coefficient ARMYU is a conversion coefficient for converting the braking quantity to the braking hydraulic pressure.

Then, second braking quantity computing part 8G sets a larger value of braking quantity correction quantity β_dec2 for a larger external disturbance determined value SUB (a larger external disturbance that hampers braking) computed by the external disturbance determining part 7B. Then, second braking quantity DEC2 is computed by adding the braking quantity correction quantity β_dec2 to preset prescribed deceleration DEC2_0.

$$DEC2 = DEC2\_0 + \beta\_dec2 \quad (14)$$

More specifically, braking quantity correction quantity β_dec2 is set by substituting the sign-inverted value of external disturbance determined value SUB with -2.5 m/s$^2$ as the lower limit and with 2.5 m/s$^2$ as the upper limit.

Then, based on second braking quantity DEC2 computed by the second braking quantity computing part 8G, second braking force instruction value computing part 8H computes braking force instruction value P_brk by means of the following listed equation.

$$P\_brk2 = DEC2 \times ARMYU \quad (15)$$

Operation, etc.

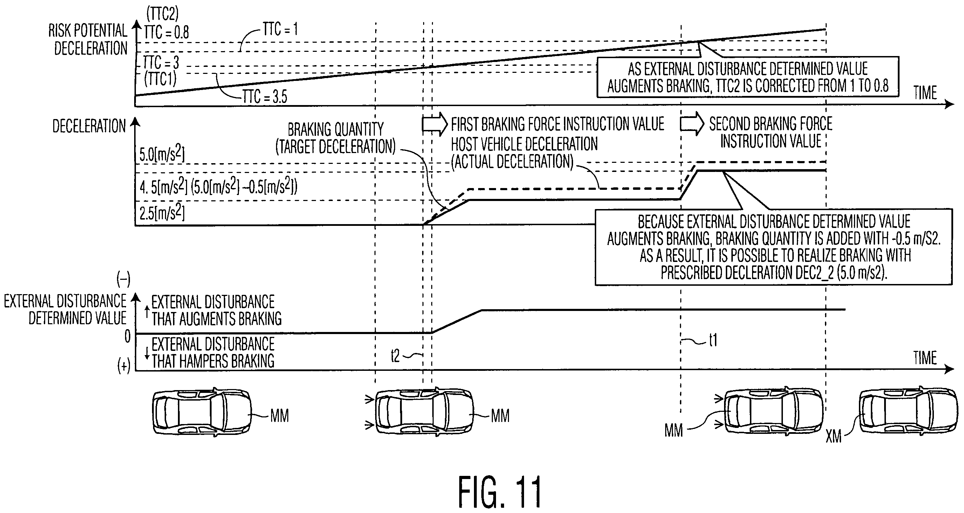

Figure 11 is a time chart illustrating Embodiment 3 of the present invention. In this time chart, the time chart for the accelerator reactive force is not shown.

In the example shown in Figure 11, a braking force is applied on the vehicle corresponding to the first braking force instruction value when the risk potential of host vehicle MM with respect to obstacle XM ahead of the host vehicle MM is higher than the risk potential represented by first threshold Th1, that is, when arrival time TTC is shorter than arrival time threshold TTC1 (time t2), and the driver does not operate accelerator 22.

In this way, a braking force is applied by the first braking force application means only when accelerator 22 is not operated. Consequently, a braking force is applied only when the driver does not intend to accelerate, so that it is possible to assist braking with minimal discomfort when a braking force is applied.

On the other hand, a braking force is applied on the vehicle corresponding to the second braking force instruction value irrespective of accelerator operation by the driver when the risk potential of host vehicle MM with respect to obstacle XM ahead of the host vehicle MM is higher than the risk potential represented by second threshold Th2, that is, when arrival time TTC is shorter than arrival time threshold TTC2 (time t3). In addition, the second braking force instruction value is set to be larger than the first braking force instruction value.

As a result, by performing braking with the second braking force instruction value computed when the risk potential is higher even than first threshold Th1 (the threshold for judging start of computing of the first braking force instruction value), it is possible to perform assistance with braking that can avoid contact with obstacle XM even when relative speed V_tar with respect to obstacle XM is high.

In addition, in this embodiment, an external disturbance that influences the braking quantity that generates the braking force is determined. In the example shown in Figure 11, external disturbance determined value SUB determines an external disturbance that augments braking (deceleration). Consequently, while the first braking instruction value is corrected to be smaller, correction is carried out so that the risk potential represented by second threshold Th2 becomes larger (that is, arrival time threshold TTC2 becomes smaller). In the example shown in Figure 11, the value of second threshold Th2 is corrected from 1 to 0.8. As a result, it is possible to apply a braking quantity sought by the second braking force application means when the risk potential of host vehicle MM with respect to obstacle XM is high.

In this way, according to this embodiment, by determining an external disturbance with respect to the braking quantity that generates the braking force and by correcting the braking quantity corresponding to the determined external disturbance, it is possible to decrease the influence of an external disturbance that influences the control quantity, such as the road slope, air drag, etc.

Effect of this embodiment

(1) The external disturbance determining means determines an external disturbance that influences the braking force generated in host vehicle MM, and, at the same time, it corrects the braking quantity corresponding to the determined external disturbance.

It is possible to decrease the influence of the external disturbance caused by road slope, air drag, etc. on the braking force.

Embodiment 4

In the following, this embodiment will be explained with reference to figures. The same symbols as those above in Embodiments 1-3 are adopted in the explanation.

The fundamental constitution of this embodiment is the same as that of Embodiments 1-3. However, it differs from Embodiments 1-3 in the processing for determining an external disturbance.

In Embodiment 1, external disturbance determined value SUB is computed when the risk potential of host vehicle MM with respect to obstacle XM ahead of the host vehicle MM is higher than the risk potential represented by first threshold Th1, and when the first braking is executed.

On the other hand, in the present embodiment, external disturbance determined value SUB is computed before the risk potential of host vehicle MM with respect to obstacle XM ahead of the host vehicle MM, and first threshold Th1 is set based on the computed value of external disturbance determined value SUB.

That is, in this embodiment, the external disturbance determining part determines the external disturbance based on the engine torque and the transmission position, even when braking assistance is not carried out.

More specifically, external disturbance determining part 7B acquires gear ratio GP of the transmission gear unit being selected based on the transmission position. Here, when the vehicle's transmission is a stepless transmission, the gear ratio may be computed by detecting the input/output rotation velocities of the transmission.

The following listed equation is used to compute acceleration determined value A tar generated based on the following listed equation in consideration of the engine torque acquired from the host vehicle/obstacle information acquisition part 6, the gear ratio, as well as a prescribed torque ratio, differential gear ratio, vehicle weight, and tire radius set based on the various parameters of the vehicle.

A_tar = engine torque x transmission gear ratio x torque ratio x differential gear ratio / vehicle

$$\text{weight / tire radius} \quad (16)$$

Then, when it is detected that the driver operates accelerator 22, external disturbance determined value SUB is computed based on the accelerator operation state input from the host vehicle/obstacle information acquisition part 6. That is, the following listed equation is used to compute external disturbance determined value SUB based on the acceleration determined value A_tar and acceleration/deceleration A input from the host vehicle/obstacle information acquisition part 6.

$$\text{SUB} = \text{A\_tar} - \text{A} \quad (17)$$

When the driver does not operate accelerator 22, the same method as that used in Embodiments 1 and 3 is adopted to compute external disturbance determined value SUB from the braking instruction value. That is, when the first braking is executed, external disturbance determined value SUB is computed based on the braking force instruction value when the first braking is executed and the actual deceleration. When the first braking is not executed, external disturbance determined value SUB is computed using the method.

Also, an adjustment is made so that a difference in the reference of external disturbance determined value SUB is absorbed using the method for computing external disturbance determined value SUB. For example, for external disturbance determined value SUB computed in Embodiment 1, when there is no influence of an external disturbance, it is set at 1, so that when external disturbance determined value SUB is computed using the method of Embodiment 1, for example, 1 is subtracted, and the reference is set at 0.

Then, based on the external disturbance determined value SUB, the various thresholds and control quantities are corrected just as in Embodiments 1 and 3.

Here, for an electric automobile or another vehicle that does not use engine 23 as the power source, acceleration determined value A_tar is computed by means of computing that is the same as the aforementioned computing.

Operation, etc.

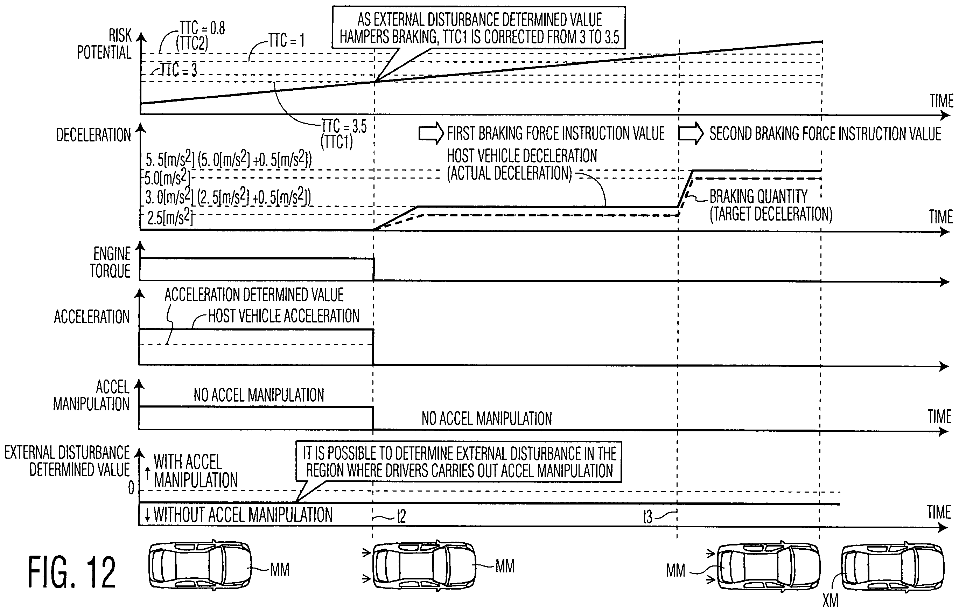

Figure 12 is a time chart illustrating Embodiment 4 of the present invention. In this time chart shown in Figure 12, the time chart for the accelerator reactive force is not shown.

In this embodiment, as shown in the time chart of Figure 12, even when the risk potential of host vehicle MM with respect to obstacle XM ahead of the host vehicle MM is lower than the risk potential represented by first threshold Th1 and third threshold Th3 (when arrival time TTC is longer than arrival time threshold TTC1 and arrival time threshold TTC3), that is, even before driving is assisted by means of braking and a accelerator reactive force, an external disturbance is determined by detecting the engine torque.

As a result, it is possible to correct first threshold Th1 (arrival time threshold TTC1) and third threshold Th3 (arrival time threshold TTC3) as references for judging the start of braking and accelerator reactive force to appropriate values corresponding to the state of the external disturbance.

Also, by computing external disturbance determined value SUB based on braking after the risk potential of host vehicle MM with respect to obstacle XM ahead of the host vehicle MM becomes larger than the risk potential represented by first threshold Th1 (when arrival time TTC becomes shorter than arrival time threshold TTC1) and braking assistance is started, just as in Embodiments 1-3, it is possible to appropriately correct second threshold Th2 (arrival time threshold TTC2) and second braking quantity DEC2 so that the braking after second threshold Th2 becomes appropriate.

Effect of this embodiment

(1) The external disturbance determining means determines an external disturbance that influences braking applied on host vehicle MM. When the level of suppression for suppressing braking applied on host vehicle MM is high due to the external disturbance determined by the external disturbance determining means, the first correction means compares this with the case when the suppression level is lower, and has at least one of the first threshold and second threshold corrected to a smaller value of the risk potential.

When the external disturbance hampers braking, assistance can be carried out at a quicker timing, and, when the external disturbance augments braking, assist can be carried out at a slower timing. As a result, it is possible to carry out assistance of driving at an appropriate timing corresponding to the external disturbance.

(2) The external disturbance determining means determines an external disturbance based on the driving force.

As a result, even when no braking force is applied on host vehicle MM, it is still possible to determine an external disturbance. That is, the braking force application means can determine an external disturbance before a braking force is applied on host vehicle MM based on the braking force instruction value computed with at least one of the first braking force instruction value computing means and the second braking force instruction value computing means.

In the Embodiments 1-4, the case has been explained in which a braking force is applied based on the risk potential of host vehicle MM with respect to obstacle XM ahead of the host vehicle MM. However, the present invention is not limited to the scheme. One may also adopt a scheme in which a braking force is applied based on the risk potential of host vehicle MM with respect to obstacle XM behind the host vehicle MM when the host vehicle MM backs up. That is, obstacle XM in the travelling direction of the host vehicle MM is detected, and a braking force is applied based on the risk potential of host vehicle MM with respect to detected obstacle XM.

**Claims**

1.  A vehicle braking assist device for a host vehicle (MM) comprising:

    a risk potential computing means (7A) for computing a risk potential of the host vehicle (MM) with respect to an obstacle (XM) in the travelling direction of the host vehicle (MM);
    an accelerator detecting means (3) for detecting the operation state of an accelerator (22); **characterised by** a first braking force application means that applies a first braking force on the host vehicle (MM) when the risk potential is higher than a predetermined first threshold and the detected operation state indicates that the accelerator (22) is not being operated; and

a second braking force application means that applies a second braking force on the host vehicle (MM) irrespective of the operation state of the accelerator (22) when the risk potential is higher than a predetermined second threshold, with the risk potential represented by the second threshold being higher than the risk potential represented by the first threshold.

**2.** The vehicle braking assist device of Claim 1 further comprising:

an accelerator reactive force application means for applying an accelerator reactive force when the risk potential is higher than a predetermined third threshold.

**3.** The vehicle braking assist device of Claim 2 wherein:

the risk potential represented by the third threshold is lower than the risk potential represented by the first threshold.

**4.** The vehicle braking assist device of any of Claims 1-3 wherein:

the risk potential computing means computes a proximity of the host vehicle to the obstacle as a value representing said risk potential, and the first braking force application means and the second braking force application means judge respectively that the risk potential is higher than the first threshold and that it is higher than the second threshold based on the computed proximity.

**5.** The vehicle braking assist device of Claim 4 wherein:

the risk potential computing means computes the proximity based on at least one of a relative distance between the host vehicle and the obstacle, a relative speed of the host vehicle with respect to the obstacle, and a relative acceleration/deceleration of the host vehicle with respect to the obstacle.

**6.** The vehicle braking assist device of Claim 4 wherein:

the risk potential computing means computes the expected arrival time determined for the host vehicle to reach the position of the obstacle as the proximity.

**7.** The vehicle braking assist device of Claim 4 further comprising:

a picture taking means for taking pictures in the travelling direction of the host vehicle, and the risk potential computing means computes the proximity based on images of the obstacle in the pictures taken by the picture taking means.

**8.** The vehicle braking assist device of any of Claims 1-7 further comprising:

an external disturbance determining means for determining an external disturbance that influences braking applied on the host vehicle; and
a first correction means for correcting the braking applied on the host vehicle by decreasing at least one of the first threshold and the second threshold when a level of suppression of braking applied on the host vehicle increases due to the external disturbance.

**9.** The vehicle braking assist device of any of claims Claim 2 and 3 further comprising:

an external disturbance determining means for determining an external disturbance that influences braking applied on the host vehicle; and
a second correction means for correcting the braking applied on the host vehicle by decreasing the third threshold when a level of suppression of braking applied on the host vehicle increases due to the external disturbance.

**10.** The vehicle braking assist device of any of Claims 1-9 further comprising:

an external disturbance determining means for determining an external disturbance that influences braking applied on the host vehicle; and

a third correction means for correcting the braking applied on the host vehicle by increasing at least one of the first braking force applied by the first braking force application means and the second braking force applied by the second braking force application means when a level of suppression of braking applied on the host vehicle increases due to the external disturbance.

11. The vehicle braking assist device of any of Claims 2 and 3 further comprising:

an external disturbance determining means for determining an external disturbance that influences braking applied on the host vehicle,
and a fourth correction means for correcting the braking applied on the host vehicle by increasing the accelerator reactive force applied by the accelerator reactive force applying means when a level of suppression of braking applied on the host vehicle increases due to the external disturbance.

12. The vehicle braking assist device of Claim 8 wherein:

the external disturbance determining means determines an external disturbance when the first braking force is applied by said first braking force application means; and
the first correction means corrects at least one of the second threshold and the first braking force applied by the first braking force application means based on the external disturbance.

13. The vehicle braking assist device of Claim 12 further comprising:

a wheel velocity detecting means for detecting a wheel velocity of the host vehicle; and
an acceleration/deceleration computing means for computing the acceleration/deceleration of the host vehicle based on the wheel velocity of the host vehicle;
wherein the external disturbance determining means determines the external disturbance based on the acceleration/deceleration of the host vehicle and the first braking force applied by said first braking force application means.

14. The vehicle braking assist device of Claims 8-13 wherein:

the external disturbance determined by the external disturbance determining means is an external disturbance caused by at least one of a braking torque transmission rate when a braking force is applied on the vehicle, a road surface frictional coefficient, and a vehicle weight of the host vehicle.

15. The vehicle braking assist device of Claims 8-13 wherein:

the external disturbance determined by the external disturbance determining means is an external disturbance caused by at least one of a road slope and an air drag.

16. A method of assisting vehicle braking of a host vehicle (MM) comprising:

detecting a risk potential of the host vehicle (MM) with respect to an obstacle (XM) in a travelling direction of the host vehicle (MM) is higher than a first threshold; detecting an operating state of accelerator (22) of the host vehicle (MM); **characterised by** applying a first braking force on the host vehicle (MM) when the risk potential of the host vehicle (MM) with respect to the obstacle (XM) in the travelling direction of the host vehicle (MM) is higher than a first threshold and the operating state of the accelerator (22) indicates the accelerator is not being operated; and
applying a second braking force on the host vehicle (MM) when the risk potential of the host vehicle with respect to the obstacle (XM) in the travelling direction of the host vehicle (MM) is higher than a second threshold that is higher than the first threshold, irrespective of the operation state of the accelerator (22).

**Patentansprüche**

1. Fahrzeugbremsassistenzvorrichtung für ein Host-Fahrzeug (MM), umfassend:

- eine Risikopotenzialberechnungseinrichtung (7A) zum Berechnen eines Risikopotenzials des Host-Fahrzeugs (MM) bezüglich eines Hindernisses (XM) in die Fahrtrichtung des Host-Fahrzeugs;
- eine Gaspedalerfassungseinrichtung (3) zum Erfassen des Betätigungszustands eines Gaspedals (22);
- **gekennzeichnet durch**
- eine erste Bremskraftaufbringungseinrichtung, die eine erste Bremskraft auf das Host-Fahrzeug (MM) aufbringt, wenn das Risikopotenzial größer als ein vorbestimmter erster Schwellenwert ist und der erfasste Betätigungszustand anzeigt, dass das Gaspedal (22) nicht betätigt wird; und
- eine zweite Bremskraftaufbringungseinrichtung, die eine zweite Bremskraft auf das Host-Fahrzeug (MM) aufbringt, unabhängig vom Betätigungszustand des Gaspedals (22), wenn das Risikopotenzial größer als ein vorbestimmter zweiter Schwellenwert ist, wobei das Risikopotenzial, das durch den zweiten Schwellenwert dargestellt wird, größer als das Risikopotenzial ist, das durch den ersten Schwellenwert dargestellt wird.

2.  Fahrzeugbremsassistenzvorrichtung gemäß Anspruch 1, ferner umfassend:

    - eine Gaspedal-Reaktionskraftaufbringungseinrichtung zum Aufbringen einer Gaspedal-Reaktionskraft, wenn das Risikopotenzial größer als ein vorbestimmter dritter Schwellenwert ist.

3.  Fahrzeugbremsassistenzvorrichtung gemäß Anspruch 2, wobei:

    - das Risikopotenzial, das durch den dritten Schwellenwert dargestellt wird, kleiner als das Risikopotenzial ist, das durch den ersten Schwellenwert dargestellt wird.

4.  Fahrzeugbremsassistenzvorrichtung gemäß einem der Ansprüche 1 bis 3, wobei:

    - die Risikopotenzialberechnungseinrichtung eine Nähe des Host-Fahrzeugs zum Hindernis als einen Wert berechnet, der das Risikopotenzial darstellt, und die erste Bremskraftaufbringungseinrichtung und die zweite Bremskraftaufbringungseinrichtung jeweils beurteilen, dass das Risikopotenzial größer als der erste Schwellenwert ist und dass es größer als der zweite Schwellenwert auf der Basis der berechneten Nähe ist.

5.  Fahrzeugbremsassistenzvorrichtung gemäß Anspruch 4, wobei:

    - die Risikopotenzialberechnungseinrichtung die Nähe auf der Basis von zumindest einem relativen Abstand zwischen dem Host-Fahrzeug und dem Hindernis, einer relativen Geschwindigkeit des Host-Fahrzeugs bezüglich des Hindernisses oder einer relativen Beschleunigung/Verlangsamung des Host-Fahrzeugs bezüglich des Hindernisses berechnet.

6.  Fahrzeugbremsassistenzvorrichtung gemäß Anspruch 4, wobei:

    - die Risikopotenzialberechnungseinrichtung die erwartete Ankunftszeit berechnet, die für das Host-Fahrzeug bestimmt wird, um die Position des Hindernisses als Nähe zu erreichen.

7.  Fahrzeugbremsassistenzvorrichtung gemäß Anspruch 4, ferner umfassend:

    - eine Bildaufnahmeeinrichtung zum Aufnehmen von Bildern in die Fahrtrichtung des Host-Fahrzeugs, und die Risikopotenzialberechnungseinrichtung die Nähe auf der Basis von Bildern des Hindernisses in den Bildern berechnet, die durch die Bildaufnahmeeinrichtung aufgenommen wurden.

8.  Fahrzeugbremsassistenzvorrichtung gemäß einem der Ansprüche 1 bis 7, ferner umfassend:

    - eine externe Störungsbestimmungseinrichtung zum Bestimmen einer externen Störung, die eine auf das Host-Fahrzeug aufgebrachte Bremsung beeinflusst; und
    - eine erste Korrektureinrichtung zum Korrigieren der Bremsung, die auf das Host-Fahrzeug durch Verringern von zumindest des ersten Schwellenwerts oder zweiten Schwellenwerts aufgebracht wird, wenn ein Niveau einer Unterdrückung der auf das Host-Fahrzeug aufgebrachten Bremsung aufgrund der externen Störung zunimmt.

9.  Fahrzeugbremsassistenzvorrichtung gemäß Anspruch 2 oder 3, ferner umfassend:

    - eine externe Störungsbestimmungseinrichtung zum Bestimmen einer externen Störung, die eine auf das Host-Fahrzeug aufgebrachte Bremsung beeinflusst, und
- eine zweite Korrektureinrichtung zum Korrigieren der auf das Host-Fahrzeug aufgebrachten Bremsung durch Verringern des dritten Schwellenwerts, wenn ein Niveau einer Unterdrückung einer auf das Host-Fahrzeug aufgebrachten Bremsung infolge der externen Störung zunimmt.

10. Fahrzeugbremsassistenzvorrichtung gemäß einem der Ansprüche 1 bis 9, ferner umfassend:

- eine externe Störungsbestimmungseinrichtung zum Bestimmen einer externen Störung, die eine auf das Host-Fahrzeug aufgebrachte Bremsung beeinflusst; und
- eine dritte Korrektureinrichtung zum Korrigieren der auf das Host-Fahrzeug aufgebrachten Bremsung durch Erhöhen von zumindest der ersten Bremskraft, die durch die erste Bremskraftaufbringungseinrichtung aufgebracht wird, oder der zweiten Bremskraft, die durch die zweite Bremskraftaufbringungseinrichtung aufgebracht wird, wenn ein Niveau einer Unterdrückung einer auf das Host-Fahrzeug aufgebrachten Bremsung infolge der externen Störung zunimmt.

11. Fahrzeugbremsassistenzvorrichtung gemäß Anspruch 2 oder 3, ferner umfassend:

- eine externe Störungsbestimmungseinrichtung zum Bestimmen einer externen Störung, die eine auf das Host-Fahrzeug aufgebrachte Bremsung beeinflusst,
- und eine vierte Korrektureinrichtung zum Korrigieren der auf das Host-Fahrzeug aufgebrachten Bremsung durch Erhöhen der Gaspedal-Reaktionskraft, die durch die Gaspedal-Reaktionskraftaufbringungseinrichtung aufgebracht wird, wenn ein Niveau einer Unterdrückung einer auf das Host-Fahrzeug aufgebrachten Bremsung infolge der externen Störung zunimmt.

12. Fahrzeugbremsassistenzvorrichtung gemäß Anspruch 8, wobei:

- die externe Störungsbestimmungseinrichtung eine externe Störung bestimmt, wenn die erste Bremskraft durch die erste Bremskraftaufbringungseinrichtung aufgebracht wird; und
- die erste Korrektureinrichtung zumindest den zweiten Schwellenwert oder die erste Bremskraft, die durch die erste Bremskraftaufbringungseinrichtung aufgebracht wird, auf der Basis der externen Störung korrigiert.

13. Fahrzeugbremsassistenzvorrichtung gemäß Anspruch 12, ferner umfassend:

- eine Radgeschwindigkeitserfassungseinrichtung zum Erfassen einer Radgeschwindigkeit des Host-Fahrzeugs; und
- eine Beschleunigungs/Verlangsamungs-Berechnungseinrichtung zum Berechnen der Beschleunigung/Verlangsamung des Host-Fahrzeugs auf der Basis der Radgeschwindigkeit des Host-Fahrzeugs;
- wobei die externe Störungsbestimmungseinrichtung die externe Störung auf der Basis der Beschleunigung/Verlangsamung des Host-Fahrzeugs und der ersten Bremskraft, die durch die erste Bremskraftaufbringungseinrichtung aufgebracht wird, bestimmt.

14. Fahrzeugbremsassistenzvorrichtung gemäß den Ansprüchen 8 bis 13, wobei:

- die externe Störung, die durch die externe Störungsbestimmungseinrichtung bestimmt wird, eine externe Störung ist, die durch zumindest eine Bremsmomentübertragungsrate, wenn eine Bremskraft auf das Fahrzeug aufgebracht wird, einen Straßenoberflächen-Reibungskoeffizienten oder ein Fahrzeuggewicht des Host-Fahrzeugs bewirkt wird.

15. Fahrzeugbremsassistenzvorrichtung gemäß Anspruch 8 bis 13, wobei:

- die externe Störung, die durch die externe Störungsbestimmungseinrichtung bestimmt wird, eine externe Störung ist, die zumindest durch eine Straßenneigung oder einen Luftwiderstand bewirkt wird.

16. Verfahren zum Unterstützen einer Fahrzeugbremsung eines Host-Fahrzeugs (MM), umfassend:

- Erfassen eines Risikopotenzials des Host-Fahrzeugs (MM) bezüglich eines Hindernisses (XM) in eine Fahrtrichtung des Host-Fahrzeugs (MM), das größer als ein erster Schwellenwert ist;
- Erfassen eines Betätigungszustands des Gaspedals (22) des Host-Fahrzeugs (MM);

- **gekennzeichnet durch** ein Aufbringen einer ersten Bremskraft auf das Host-Fahrzeug (MM), wenn das Risikopotenzial des Host-Fahrzeugs (MM) bezüglich des Hindernisses (XM) in Fahrtrichtung des Host-Fahrzeugs (MM) größer als ein erster Schwellenwert ist und der Betätigungszustand des Gaspedals (22) anzeigt, dass das Gaspedal nicht betätigt wird; und

- Aufbringen einer zweiten Bremskraft auf das Host-Fahrzeug (MM), wenn das Risikopotenzial des Host-Fahrzeugs (MM) bezüglich des Hindernisses (XM) in Fahrtrichtung des Host-Fahrzeugs (MM) größer als ein zweiter Schwellenwert ist, der größer als der erste Schwellenwert ist, unabhängig vom Betätigungszustand des Gaspedals (22).

**Revendications**

1. Dispositif d'assistance au freinage de véhicule pour un véhicule hôte (MM) comprenant :

   un moyen de calcul de potentiel de risque (7A) pour calculer un potentiel de risque du véhicule hôte (MM) par rapport à un obstacle (XM) dans la direction de déplacement du véhicule hôte (MM) ;
   un moyen de détection d'accélérateur (3) pour détecter l'état de fonctionnement d'un accélérateur (22) ;
   **caractérisé par**
   un moyen d'application de première force de freinage qui applique une première force de freinage sur le véhicule hôte (MM) lorsque le potentiel de risque est supérieur à un premier seuil prédéterminé et l'état de fonctionnement détecté indique que l'accélérateur (22) ne fonctionne pas ; et
   un moyen d'application de deuxième force de freinage qui applique une deuxième force de freinage sur le véhicule hôte (MM) quel que soit l'état de fonctionnement de l'accélérateur (22) lorsque le potentiel de risque est supérieur à un deuxième seuil prédéterminé, le potentiel de risque représenté par le deuxième seuil étant supérieur au potentiel de risque représenté par le premier seuil.

2. Dispositif d'assistance au freinage de véhicule de la revendication 1, comprenant en outre :

   un moyen d'application de force de réaction d'accélérateur pour appliquer une force de réaction d'accélérateur lorsque le potentiel de risque est supérieur à un troisième seuil prédéterminé.

3. Dispositif d'assistance au freinage de véhicule de la revendication 2, dans lequel :

   le potentiel de risque représenté par le troisième seuil est inférieur au potentiel de risque représenté par le premier seuil.

4. Dispositif d'assistance au freinage de véhicule de l'une des revendications 1 à 3, dans lequel :

   le moyen de calcul de potentiel de risque calcule une proximité du véhicule hôte de l'obstacle en tant que valeur représentant ledit potentiel de risque, et le moyen d'application de première force de freinage et le moyen d'application de deuxième force de freinage jugent respectivement que le potentiel de risque est supérieur au premier seuil et qu'il est supérieur au deuxième seuil sur la base de la proximité calculée.

5. Dispositif d'assistance au freinage de véhicule de la revendication 4, dans lequel :

   le moyen de calcul de potentiel de risque calcule la proximité sur la base d'au moins l'une d'une distance relative entre le véhicule hôte et l'obstacle, d'une vitesse relative du véhicule hôte par rapport à l'obstacle et d'une accélération/décélération relative du véhicule hôte par rapport à l'obstacle.

6. Dispositif d'assistance au freinage de véhicule de la revendication 4, dans lequel :

   le moyen de calcul de potentiel de risque calcule l'heure d'arrivée prévue déterminée pour que le véhicule hôte atteigne la position de l'obstacle comme étant la proximité.

7. Dispositif d'assistance au freinage de véhicule de la revendication 4, comprenant en outre :

   un moyen de prise de photo pour prendre des photos dans la direction de déplacement du véhicule hôte, et le moyen de calcul de potentiel de risque calcule la proximité sur la base d'images de l'obstacle dans les photos prises par le moyen de prise de photo.

**8.** Dispositif d'assistance au freinage de véhicule de l'une des revendications 1 à 7, comprenant en outre :

un moyen de détermination de perturbation externe pour déterminer une perturbation externe qui influence le freinage appliqué sur le véhicule hôte ; et
un premier moyen de correction pour corriger le freinage appliqué sur le véhicule hôte par diminution d'au moins l'un du premier seuil et du deuxième seuil lorsqu'un niveau de suppression de freinage appliqué sur le véhicule hôte augmente en raison de la perturbation externe.

**9.** Dispositif d'assistance au freinage de véhicule de l'une des revendications 2 et 3, comprenant en outre :

un moyen de détermination de perturbation externe pour déterminer une perturbation externe qui influence le freinage appliqué sur le véhicule hôte ; et
un deuxième moyen de correction pour corriger le freinage appliqué sur le véhicule hôte par diminution du troisième seuil lorsqu'un niveau de suppression de freinage appliqué sur le véhicule hôte augmente en raison de la perturbation externe.

**10.** Dispositif d'assistance au freinage de véhicule de l'une des revendications 1 à 9, comprenant en outre :

un moyen de détermination de perturbation externe pour déterminer une perturbation externe qui influence le freinage appliqué sur le véhicule hôte ; et
un troisième moyen de correction pour corriger le freinage appliqué sur le véhicule hôte par augmentation d'au moins l'une de la première force de freinage appliquée par le moyen d'application de première force de freinage et de la deuxième force de freinage appliquée par le moyen d'application de deuxième force de freinage lorsqu'un niveau de suppression de freinage appliqué sur le véhicule hôte augmente en raison de la perturbation externe.

**11.** Dispositif d'assistance au freinage de véhicule de l'une des revendications 2 et 3, comprenant en outre :

un moyen de détermination de perturbation externe pour déterminer une perturbation externe qui influence le freinage appliqué sur le véhicule hôte,
et un quatrième moyen de correction pour corriger le freinage appliqué sur le véhicule hôte par augmentation de la force de réaction d'accélérateur appliquée par le moyen d'application de force de réaction d'accélérateur lorsqu'un niveau de suppression de freinage appliqué sur le véhicule hôte augmente en raison de la perturbation externe.

**12.** Dispositif d'assistance au freinage de véhicule de la revendication 8, dans lequel :

le moyen de détermination de perturbation externe détermine une perturbation externe lorsque la première force de freinage est appliquée par ledit moyen d'application de première force de freinage ; et
le premier moyen de correction corrige au moins l'un(e) du deuxième seuil et de la première force de freinage appliquée par le moyen d'application de première force de freinage sur la base de la perturbation externe.

**13.** Dispositif d'assistance au freinage de véhicule de la revendication 12, comprenant en outre :

un moyen de détection de vitesse de roue pour détecter une vitesse de roue du véhicule hôte ; et
un moyen de calcul d'accélération/décélération pour calculer l'accélération/décélération du véhicule hôte sur la base de la vitesse de roue du véhicule hôte ;
dans lequel le moyen de détermination de perturbation externe détermine la perturbation externe sur la base de l'accélération/décélération du véhicule hôte et de la première force de freinage appliquée par ledit moyen d'application de première force de freinage.

**14.** Dispositif d'assistance au freinage de véhicule des revendications 8 à 13, dans lequel :

la perturbation externe déterminée par le moyen de détermination de perturbation externe est une perturbation externe provoquée par au moins l'un d'un taux de transmission de couple de freinage lorsqu'une force de freinage est appliquée sur le véhicule, d'un coefficient de frottement de surface de roulement et d'un poids de véhicule du véhicule hôte.

**15.** Dispositif d'assistance au freinage de véhicule des revendications 8 à 13, dans lequel :

la perturbation externe déterminée par le moyen de détermination de perturbation externe est une perturbation externe provoquée par au moins l'une d'une pente de route et d'une traînée atmosphérique.

**16.** Procédé d'assistance au freinage de véhicule d'un véhicule hôte (MM) comprenant le fait :

de détecter qu'un potentiel de risque du véhicule hôte (MM) par rapport à un obstacle (XM) dans une direction de déplacement du véhicule hôte (MM) est supérieur à un premier seuil ;
de détecter un état de fonctionnement de l'accélérateur (22) du véhicule hôte (MM) ;
**caractérisé par** le fait d'appliquer une première force de freinage sur le véhicule hôte (MM) lorsque le potentiel de risque du véhicule hôte (MM) par rapport à l'obstacle (XM) dans la direction de déplacement du véhicule hôte (MM) est supérieur à un premier seuil et l'état de fonctionnement de l'accélérateur (22) indique que l'accélérateur ne fonctionne pas ; et
d'appliquer une deuxième force de freinage sur le véhicule hôte (MM) lorsque le potentiel de risque du véhicule hôte par rapport à l'obstacle (XM) dans la direction de déplacement du véhicule hôte (MM) est supérieur à un deuxième seuil qui est supérieur au premier seuil, quel que soit l'état de fonctionnement de l'accélérateur (22).

FIG. 1

FIG. 2

FIG. 3

EP 2 409 884 B1

FIG. 4

FIG. 5

EP 2 409 884 B1

FROM HOST VEHICLE/ OBSTACLE INFORMATION ACQUISITION PART 6

7

ASSIST INFORMATION COMPUTING PART

EXTERNAL DISTURBANCE DETERMINING PART

ACCEL PEDAL REACTIVE FORCE COMPUTING PART

10

THIRD THRESHOLD SETTING PART

10A

PEDAL REACTIVE FORCE APPLICATION JUDGEMENT PART

10B

PEDAL REACTIVE QUANTITY COMPUTING PART

10C

ACCEL PEDAL REACTIVE FORCE INSTRUCTION VALUE COMPUTING PART

10D

ACCEL PEDAL'S REACTIVE FORCE APPLICATION DEVICE

11

RISK POTENTIAL

ACCEL OPENNESS
EXTERNAL DISTURBANCE DETERMINED VALUE

FIG. 6

EP 2 409 884 B1

```
                    ┌─────────┐
                    │  START  │
                    └────┬────┘
                         ▼
         ┌──────────────────────────────────┐
         │  ACQUISTION OF ASSIST INFORMATION │────S10
         └──────────────┬───────────────────┘
                        ▼
         ┌──────────────────────────────────┐
         │ PROCESSING FOR SETTING FIRST THRESHOLD │────S20
         └──────────────┬───────────────────┘
                        ▼
                    ╱─────────╲     S30
                   ╱   FIRST   ╲
                  ╱  THRESHOLD < ╲     NO
                  ╲ RISK POTENTIAL╱──────────────────────┐
                   ╲(TTC<TTC1)?  ╱                        │
                    ╲─────┬─────╱                         │
                       YES │                              │
                           ▼                              │
                    ╱─────────╲    S40                    │
                   ╱           ╲      YES                 │
                  ╱ YES/NO OF ACCEL╲──────────────────┐   │
                  ╲ MANIPULATION? ╱                   │   │
                   ╲─────┬─────╱                      │   │
                      NO │      S50                   │   │
                         ▼                            ▼   ▼
         ┌──────────────────────────────────┐   ┌──────────────────┐
         │ PROCESSING TO SET FIRST BRAKING FORCE │   │FIRST BRAKING FORCE=0│ S60
         └──────────────┬───────────────────┘   └─────────┬────────┘
                        │◄───────────────────────────────┘
                        ▼
         ┌────────────────────────────────────────────┐
         │ PROCESSING OF COMPUTING OF FIRST BRAKING FORCE│────S70
         └──────────────┬─────────────────────────────┘
                        ▼
         ┌────────────────────────────────────────────┐
         │ PROCESSING OF SETTING OF SECOND THRESHOLD   │────S80
         └──────────────┬─────────────────────────────┘
                        ▼
                    ╱─────────╲    S90
                   ╱  SECOND   ╲
                  ╱ THRESHOLD <  ╲    NO
                  ╲ RISK POTENTIAL╱───────────────────┐
                   ╲(TTC<TTC2)?  ╱                     │
                    ╲─────┬─────╱                      │
                      YES │     S100                   ▼
                          ▼                     ┌────────────────────┐
         ┌──────────────────────────────────┐  │SECOND BRAKING FORCE=0│ S110
         │PROCESSING TO SET SECOND BRAKING FORCE│  └─────────┬──────────┘
         └──────────────┬───────────────────┘            │
                        │◄────────────────────────────────┘
                        ▼
         ┌────────────────────────────────────────────────────┐
         │ PROCESSING TO COMPUTE SECOND BRAKING FORCE INSTRUCTION VALUE│────S120
         └──────────────┬─────────────────────────────────────┘
                        ▼
         ┌────────────────────────────────────────────────┐
         │ PROCESSING TO SELECT BRAKING FORCE INSTRUCTION VALUE│────S130
         └──────────────┬─────────────────────────────────┘
                        ▼
         ┌────────────────────────────────────────────────┐
         │ PROCESSING TO OUTPUT BRAKING FORCE INSTRUCTION VALUE│────S140
         └──────────────┬─────────────────────────────────┘
                        ▼
                    ┌─────────┐
                    │ RETURN  │
                    └─────────┘
```

FIG. 7

START

PROCESSING TO ACQUIRE ASSIST INFORMATION — S200

PROCESSING TO SET THIRD THRESHOLD — S210

S220

THIRD
THRESHOLD <
RISK POTENTIAL
(TTC<TTC3)?

NO

YES

S230

PROCESSING TO COMPUTE ACCEL
PEDAL REACTIVE FORCE QUANTITY

S240

ACCEL PEDAL
REACTIVE FORCE = 0

ACCEL PEDAL REACTIVE FORCE
INSTRUCTION VALUE
COMPUTING TREATMENT — S250

PROCESSING TO OUTPUT ACCEL
PEDAL REACTIVE FORCE
INSTRUCTION VALUE — S260

RETURN

FIG. 8

FIG. 9

EP 2 409 884 B1

(a) OBSTACLE IS NOT BECOMING NEARER

XM

TARGET AREA: 10

IMAGE AREA: 100

RISK POTENTIAL = 10%

(b) OBSTACLE IS BECOMING NEARER

XM

IMAGE AREA: 100

TARGET AREA: 60

RISK POTENTIAL = 60%

FIG. 10

FIG. 11

FIG. 12

**REFERENCES CITED IN THE DESCRIPTION**

**Patent documents cited in the description**

- JP 2009154607 A

- EP 1743818 A1